# EUROPEAN PATENT APPLICATION

(11) **EP 4 671 967 A1**
(43) Date of publication of application: **31.12.2025**
(21) Application number: 24759596.0
(22) Date of filing: 08.02.2024
(51) Int. Cl.: G06F 8/38, G06F 8/34, G06F 9/451, G06F 9/445, G06F 18/24

(54) **SPECIAL EFFECT PRODUCTION METHOD AND APPARATUS, DEVICE, AND STORAGE MEDIUM**

(30) Priority: 23.02.2023 CN 202310174126
(71) Applicant: Beijing Zitiao Network Technology Co., Ltd., Beijing 100190 (CN)
(72) Inventor: CHEN, Kewei, Beijing 100028 (CN); YU, Shiyun, Beijing 100028 (CN); LU, Yang, Beijing 100028 (CN); NI, Guangyao, Beijing 100028 (CN); LIU, Shu, Beijing 100028 (CN)
(74) Representative: Isarpatent
(86) International application number: PCT/CN2024/076941
(87) International publication number: WO 2024/174919

(57) **Abstract**

Embodiments of the present disclosure provide a special effect production method and apparatus, a device, and a storage medium. The method comprises: displaying a special effect production interface; receiving a component adding operation, wherein the component adding operation relates to selecting component tag information of a first target component in a presented component menu list; and determining a first sub-navigation hierarchy table to which the first target component belongs, and presenting the component tag information under a target hierarchy node of the first sub-navigation hierarchy table, wherein the first sub-navigation hierarchy table is displayed in a special effect component navigation view in advance according to a first rendering sequence.

## Description

### CROSS-REFERENCE TO RELATED APPLICATIONS

The present application claims priority to and is based on a Chinese application with an application number 202310174126.X and a filing date of February 23, 2023, the aforementioned application is hereby incorporated by reference in its entirety.

### FIELD OF THE INVENTION

The embodiments of the present disclosure relate to the field of computer application technology, and in particular to an effect production method, device, equipment and storage medium.

### BACKGROUND

With the development of computer technology, many effect scenes based on technologies such as virtual reality have emerged. Currently, an effect scene can be produced using a three-dimensional scene production tool.

When drawing of an effect component for an effect scene is performed through a three-dimensional scene production tool, object information (such as component label information) of the drawn effect component will be presented in a navigation view.

### DISCLOSURE OF THE INVENTION

The present invention provides an effect production method, apparatus, device and storage medium to achieve effective production of effect.

In a first aspect, an embodiment of the present disclosure provides an effect production method, including:
displaying an effect production interface, the effect production interface including an effect component navigation view;
receiving a component adding operation, wherein the component adding operation is to select component label information of a first target component in a presented component menu list;
determining a first sub-navigation hierarchical table to which the first target component belongs, and presenting the component label information under a target hierarchical node in the first sub-navigation hierarchical table; wherein the first sub-navigation hierarchical table is displayed in the effect component navigation view in a first rendering sequence in advance.

In a second aspect, an embodiment of the present disclosure further provides an effect rendering method, including:
acquiring a target effect rendering file of a target effect to be rendered;
extracting a target rendering sequence and corresponding target component data for each target component in the target effect rendering file, wherein the target rendering sequence is determined based on the effect production method described in the first aspect of embodiment;
rendering each target component by using the target component data in the target rendering sequence, to generate a target effect.

In a third aspect, an embodiment of the present disclosure further provides an effect production apparatus, including:
a first display module configured to display an effect production interface, the effect production interface including an effect component navigation view;
a receiving module, configured to receive a component adding operation, wherein the component adding operation is to select component label information of a first target component in a presented component menu list;
a second display module, configured to determine a first sub-navigation hierarchical table to which the first target component belongs, and present the component label information under a target hierarchical node in the first sub-navigation hierarchical table; wherein the first sub-navigation hierarchical table is displayed in the effect component navigation view in a first rendering sequence in advance.

In a fourth aspect, an embodiment of the present disclosure further provides an effect rendering apparatus, including:
an acquisition module, configured to acquire a target effect rendering file of a target effect to be rendered;
an extraction module, configured to extract a target rendering sequence and corresponding target component data for each target component in the target effect rendering file, wherein the target rendering sequence is determined based on the effect production method described in the first aspect of embodiment;
a rendering module, configured to render each target component by using the target component data in the target rendering sequence, to generate a target effect.

In a fifth aspect, an embodiment of the present disclosure further provides an electronic device, the electronic device comprising:
one or more processors;
a storage device for storing one or more programs,
wherein, the one or more programs, when executed by the one or more processors, cause the one or more processors to implement the method described in any embodiment of the present disclosure.

In a sixth aspect, an embodiment of the present disclosure further provides a computer-readable storage medium on which a computer program is stored, and wherein, the program, when executed by a processor, causes implementation of the method described in any embodiment of the present disclosure.

The technical solution of the disclosed embodiment can display an effect production interface which includes an effect component navigation view; receive a component adding operation, wherein the component adding operation is to select component label information of a first target component in a presented component menu list; determine a first sub-navigation hierarchical table to which the first target component belongs, and present the component label information under a target hierarchical node in the first sub-navigation hierarchical table; wherein the first sub-navigation hierarchical table is displayed in the effect component navigation view in a first rendering sequence in advance.

### DESCRIPTION OF THE DRAWINGS

The above and other features, advantages and aspects of various embodiments of the present disclosure will become more apparent when taken in conjunction with the drawings and with reference to the following detailed description. Throughout the drawings, the same or similar reference numbers refer to the same or similar elements. It should be understood that the drawings are schematic and that the components and elements are not necessarily drawn to scale. In the drawings:
FIG. 1a is a schematic flow chart of an effect production method provided by an embodiment of the present disclosure;
FIG. 1b shows an exemplary diagram of an effect production interface during execution of the effect production method provided by the embodiment;
FIG. 1c shows an execution example diagram of performing a first drag-and-drop operation in an effect component navigation view during execution of the effect production method provided by the embodiment;
FIG. 1d shows an effect example diagram presented in an effect component navigation view after a first drag-and-drop operation is performed in the effect component navigation view during execution of the effect production method provided by the embodiment;
FIG. 1e shows an effect example diagram presented in an effect rendering preview panel before a first drag-and-drop operation is performed in an effect component navigation view during the execution of the effect production method provided in this embodiment;
FIG. 1f shows an effect example diagram presented in an effect rendering preview panel after a first drag-and-drop operation is performed in an effect component navigation view during execution of the effect production method provided in the embodiment;
FIG. 1g shows an exemplary diagram of presentation of an effect component navigation view during execution of the effect production method provided in the embodiment;
FIG. 1h shows an exemplary diagram of presentation after an entry collapse-or-expand operation is received during execution of the effect production method provided in the embodiment;
FIG. 1i shows an exemplary diagram of a rendering effect after a rendering hide-or-present operation is received during execution of the effect production method provided in the embodiment;
FIG.2 is a schematic diagram showing a flow chart of an effect rendering method provided by an embodiment of the present disclosure;
FIG.3 is a structural schematic diagram showing an effect production apparatus provided by an embodiment of the present disclosure;
FIG.4 is a schematic diagram showing a structure of an effect rendering apparatus provided by an embodiment of the present disclosure;
FIG.5 is a schematic diagram showing a structure of an electronic device provided by an embodiment of the present disclosure.

### DETAILED DESCRIPTION OF PREFERRED EMBODIMENTS

Embodiments of the present disclosure will be described in more detail below with reference to the accompanying drawings. Although some embodiments of the present disclosure are shown in the drawings, it should be understood that the present disclosure can be embodied in various forms and should not be construed as being limited to the embodiments set forth here, but rather, these embodiments are provided for a more thorough and complete understanding of the present disclosure. It should be understood that the drawings and embodiments of the present disclosure are only used for illustrative purposes, and are not used to limit the protection scope of the present disclosure.

It should be understood that the steps described in the method embodiments of the present disclosure may be performed in a different order and/or in parallel. Furthermore, method embodiments may include additional steps and/or omit performing the illustrated steps. The scope of the present disclosure is not limited in this respect.

As used herein, the term "including" and its variants are open-ended including, that is, "including but not limited to". The term "based on" is "at least partially based on"; the term "one embodiment" means "at least one embodiment"; the term "another embodiment" means "at least one other embodiment"; the term "some embodiments" means "at least some embodiments". Related definitions of other terms will be given in the following description.

It should be noted that the concepts of "first" and "second" mentioned in the present disclosure are only used to distinguish different devices, modules or units, and are not used to limit the order or interdependence of the functions performed by these devices, modules or units.

It should be noted that the modifications of "a" and "a plurality" mentioned in the present disclosure are schematic rather than limiting, and those skilled in the art should understand that unless the context clearly indicates otherwise, they should be understood as "one or more".

Names of messages or information exchanged among multiple devices in the embodiments of the present disclosure are only used for illustrative purposes, and are not used to limit the scope of these messages or information.

It may be understood that before using the technical solutions disclosed in the embodiments of the present disclosure, a user should be informed of the type, range of usage, usage scenario, etc. of personal information involved in the present disclosure in an appropriate manner in accordance with relevant laws and regulations, and the authorization of the user should be obtained.

For example, in response to receiving an active request from a user, prompt information is sent to the user to clearly inform the user that the operation requested to be performed will require access to and usage of the user's personal information. In this way, the user may independently choose whether to provide the personal information to software or hardware such as an electronic device, an application, a server, or a storage medium that performs the operation of the technical solution of the present disclosure according to the prompt information.

As an alternative but non-limiting implementation, in response to receiving an active request from the user, the prompt information may be sent to the user in the form of a pop-up window, for example, and the prompt information may be presented in text in the pop-up window. In addition, the pop-up window may further include a selection control for the user to choose whether to "agree" or "disagree" to provide the personal information to the electronic device.

It may be understood that the above process of notifying and acquiring the authorization from the user is merely illustrative and is not intended to limit the implementations of the present disclosure. Other manners that satisfy the requirements of relevant laws and regulations may also be applied to the implementations of the present disclosure.

In addition, it may be understood that the data involved in the technical solution (including but not limited to the data itself, the acquisition of the data, or the usage of the data) should comply with the requirements of corresponding laws, regulations, and related provisions.

There may have various application scenarios of effect production, for example, the effect production can be applied to virtual reality scenes, augmented reality scenes, and scenes where filtering, deformation, beautification, etc. are performed on captured or uploaded image views. A effect production method can be used to achieve certain effects on pictures, for example, stickers, deformations, filters, virtual object setting, virtual object realization and other effects on the video need to be produced based on the effect production method in advance. The functionality realized by the effect production method can be understood as producing one or more prop packages and sending the prop packages to an application, when a certain effect function needs to be realized, the application can call the prop package to act on a relevant target object. When effect production is required, using an effect production method is equivalent to using an effect production tool. For example, when an effect is added to a video, the effect can be produced based on an effect production method. A process of effect production is equivalent to continuously adding information related to effect components, and the effect components will have corresponding drawing presentation orders on a drawing panel.

It should be noted that the drawing presentation order of an effect component in the drawing panel is related to the object rendering order of the effect component in a hierarchy in a view list in which the effect component is located, and a camera rendering order of a camera in the hierarchy. For example, in the camera rendering order, a first rendering camera will be found first, and corresponding effect components will be drawn and presented in sequence based on an object rendering order in the camera, and then executed in sequence.

Generally, in the process of producing an effect scene, when it is necessary to adjust the drawing presentation order of two effect components, especially adjust the drawing presentation order of two effect components that are not in the same camera, designers are often required to manually perform more complex camera parameter adjustment operations, the lack of visually intuitive adjustment interaction means also increases the cost of learning and understanding the effect production for designers. In addition, when a complex effect scene is produced, a manner of manually recording the rendering order of effect components in the current effect production implementation cannot guarantee accuracy and validity of the recorded information.

In existing production tools, the object information of the drawn effect components are simply displayed in the navigation view, if the effect components are to be classified, experienced designers are required to manually classify the object information of the effect components. In addition, when effect components are rendered in an effect rendering stage, in order to ensure the effect rendering effect, different effect components are rendered in sequential order, the rendering order also requires designers to pre-configure it in the design stage, and the entire configuration process is relatively cumbersome. The above methods all increase the learning and understanding costs of designers, and cannot guarantee accuracy and effectiveness of the drawing of effect components.

Based on this, an embodiment provides an effect production method. Different from the related art in which the component label information of effect components needs to be manually classified and the rendering order needs to be manually configured, the technical solution of the present disclosure, during the effect production process, can directly determine a sub-scene to which an effect component belongs and a layer in the sub-scene at which the effect component is located upon receipt of an component addition operation for the effect component, thereby presenting component label information of the added effect component (such as the name of the effect component) in a sub-navigation hierarchical table of a sub-scene to which it belongs; meanwhile, the sub-navigation hierarchical table can be presented in an effect component navigation view in a certain rendering order, so that the designer can quickly know the rendering order of the added effect components when rendering through the presented effect component navigation view. The above technical scheme of the embodiment can realize automatic classification of the effect components added in the effect production into the sub-scenes to which they belong; meanwhile, automatic sorting of sub-navigation hierarchical tables in the effect component navigation view is equivalent to automatic configuration of the rendering order of the effect components, which can also achieve the effect of showing the rendering order of the effect components to the designers from a visual perspective. The above technical scheme can simplify the effect production process, reduces the development and understanding costs of designers, and thus improves the accuracy and effectiveness of effect component drawing.

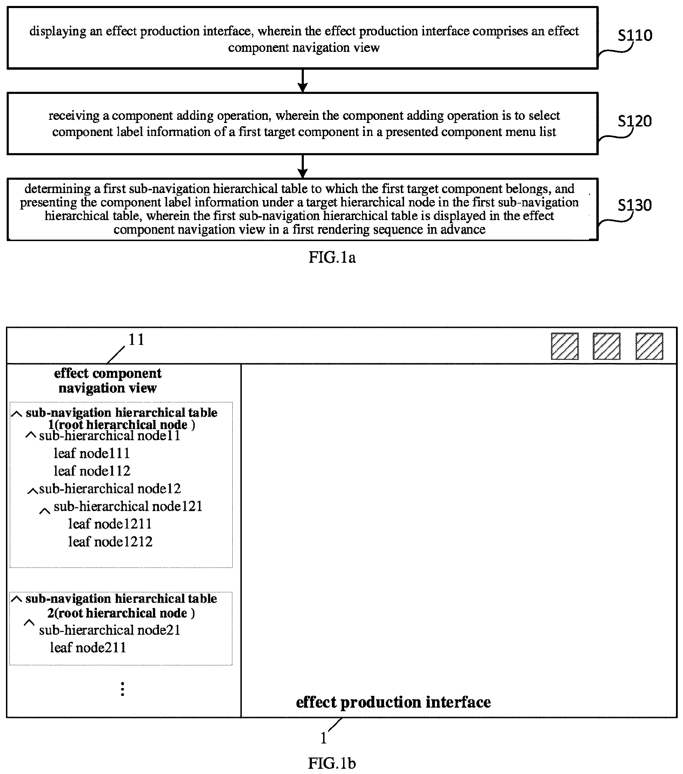

FIG. 1a shows a flow chart of an effect production method provided by an embodiment of the present disclosure, the embodiment of the present disclosure is applicable to the situation of performing effect production, the method can be executed by the effect production apparatus, the apparatus can be implemented in the form of software and/or hardware, and optionally, by an electronic device.

As shown in FIG. 1a, the effect production method provided by the embodiment of the present disclosure may specifically include:
S110, displaying an effect production interface, the effect production interface including an effect component navigation view.

It is understandable that in the process of effect production, it is necessary to add desired effect components, and further render each effect component to realize the effect. A effect component can be regarded as an element included in the effect to be produced. From the user's perspective, when the user wants to perform the effect production, an effect production function can be triggered to turn on an effect production interface. Upon receiving the effect production function trigger operation, the executive subject can display the effect production interface. Exemplarily, the effect production method in the embodiment of the present disclosure may be implemented by an effect production tool in an electronic device. When the user needs to perform the effect production, the user needs to start an effect production tool so that the electronic device can present the effect production interface.

In this embodiment, an effect production interface can be understood as an interface provided to the user for performing effect production. The specific layout of the effect production interface can be designed in the development stage, and the effect production interface includes an effect component navigation view by default. The effect production interface may include relevant information or buttons for effect production therein. When the effect production is performed, user's operations related to the effect production can be received to implement the effect production. Among them, the effect component navigation view can include effect components that have been added during the effect production process, and the effect components can be displayed in the effect component navigation view in the form of component label information. The effect component navigation view not only includes the added effect components, but also presents a hierarchical relationship between the effect components. In this embodiment, there is no specific limitation on the display form of the effect component navigation view, for example, a sub-navigation hierarchical table can be a tree structure component as a whole, and the sub-navigation hierarchical table can contain multiple nodes, and the nodes are arranged in a hierarchical manner. For example, an entry on the top row in the sub-navigation hierarchical table can be used as a root node in the tree structure; a root node may have a sub-node or a leaf node, and the component label information of the effect component is used as a row entry in the sub-navigation hierarchical table.

S120: receiving a component adding operation, wherein the component adding operation is to select component label information of a first target component in a presented component menu list.

It is clear that when a user wants to perform an effect production, the user needs to first select effect components included in the effect intended to be achieved, and add them to the effect component navigation view. In this embodiment, the component menu list may display component label information of each effect component available to be selected by the user. Among them, the component label information of which effect components are included in the component menu list and a presentation form of the menu list can be set according to actual needs. The component label information is information that can characterize an effect component and can be bound with the effect component, for example, the name of the effect component may be used as the component label information.

Continuing with the above description, the component menu list can be presented on the effect production interface in a list format all the time, or the component menu list can be in a collapsed state by default, when a user wants to add a component, the component menu list would be called and presented first. For example, the component menu list control may be single-clicked, and when a single-click operation on the component menu list control is received, the component menu list would be presented.

From the user's perspective, when a user wants to add an effect component, a component adding operation can be performed. The component adding operation is to select component label information of a certain effect component in the presented component menu list, in this embodiment, the effect component corresponding to the selected component label information is indicated as a first target component. From the perspective of the executive subject, the executive subject can receive the component adding operation performed by the user.

It can be understood that the behavior of the user selecting component label information of a first target component in the presented component menu list through a control signal input device can be determined by the relevant hardware or software of the executive subject performing parsing in cooperation with each other, and what operation the user has performed on the effect production interface can be determined by analyzing data information related to the behavior of selecting the component label information of the first target component, thereby the component adding operation triggered by the user can be received.

In this embodiment, a specific implementation of the executive subject parsing out that the user has performed a component adding operation in the effect production interface can be described as: by means of the effect production interface configured in the electronic device, it is possible to respond to a selection signal generated by an input device controlling a cursor to click on the effect production interface, thereby obtaining click information generated when the input device controls the cursor to click and feeding it back to an upper-level processing module, the processing module can analyze the click information to determine whether the user has performed a selection operation on the effect production interface and what component label information the operation has selected. By means of the selected component label information, the processing module can determine that the user manipulates the input device to perform an operation of selecting the component label information of the first target component in the presented component menu list on the effect production interface.

At this point, the executive subject may deem that the user has interacted with the effect production interface to perform a component adding operation. Among them, selecting the component label information of the first target component from the component menu list presented on the effect production interface can be in various manners, which can be set according to user's requirements or operation habits. For example, the selection can be performed by mouse left-clicking, by mouse right-clicking, or by mouse double-clicking.

S130. determining a first sub-navigation hierarchical table to which the first target component belongs, and presenting the component label information under a target hierarchical node in the first sub-navigation hierarchical table; wherein the first sub-navigation hierarchical table is displayed in the effect component navigation view in a first rendering sequence in advance.

In this embodiment, during the effect production, the effect components involved need to be added to the effect component navigation view respectively, so that through the component adding operation performed by the user, the effect components to be added can be added to the effect component navigation view. The hierarchical relationship between the added effect components can be presented in the effect component navigation view. In this step, in respondence to the component adding operation in the above step, it is presented at a visual level that the effect component navigation view will include a sub-navigation hierarchical table, which contains one or more nodes, and the label information of a target component can be presented under a hierarchical node.

Different from the related art in which automatic classification cannot be achieved when adding effect components, in this embodiment, each sub-navigation hierarchical table is regarded as a whole component, and respective sub-navigation hierarchical table are decoupled and relatively independent from each other. All the contents associated with a hierarchical table are recorded and displayed under hierarchical nodes in the sub-navigation hierarchical table, which is equivalent to managing the sub-navigation hierarchical table as a whole. Therefore, when a component adding operation is received, the label information corresponding to the first target component needs to be added to a corresponding hierarchical node in the sub-navigation hierarchical table to which it belongs.

In this embodiment, each sub-navigation hierarchical table can be managed as a whole, the sub-navigation hierarchical table to which the target component belongs is indicated as the first sub-navigation hierarchical table, and the hierarchical node that needs to be added to the first sub-navigation hierarchical table is indicated as the target hierarchical node. It can be understood that before the component label information is presented under the target hierarchical node in a first sub-navigation hierarchical table, it is necessary to first determine the first sub-navigation hierarchical table to which the first target component belongs, and then determine whether the first sub-navigation hierarchical table exists in the target component navigation view, if so, the component label information can be presented under a target hierarchical node in a target hierarchical table of the first sub-navigation hierarchical table. If not, it is necessary to first create a first sub-navigation hierarchical table in the effect component navigation view, and then present the component label information under the target hierarchical node in the first sub-navigation hierarchical table.

Considering that in the related technology, when it is intended to make component adjustment, the relevant parameter configuration shall be performed on a parameter panel corresponding to the target component. The relationship among effect components can be established through parameter configuration and cannot be intuitively embodied in the navigation view. When a drag-and-drop operation is performed, only presentation of the effect component navigation view is subject to relevant adjustment, and when a cross-layer adjustment is intended to be embodied in the rendering effect, the corresponding parameters of the sub-navigation hierarchical table shall be adjusted manually so as to achieve the hierarchical adjustment. That is, in the related art, the drag-and-drop operation for a sub-navigation hierarchical table is only embodied in visual relationship presentation, without being associated with the rendered picture. In the embodiment, by associating the effect component navigation view with the rendering sequence, when the order of the sub-navigation hierarchical tables in the effect component navigation view is adjusted, the rendering effect display can be adjusted accordingly.

In the embodiment, the effect components required for effect production and the categories of effect components can be pre-stored in the device, and the rendering sequential order for each category can be pre-set. That is, a default rendering order between the categories corresponding to the effect components can be pre-stored in the device, which is indicated as a first rendering sequence. When the first sub-navigation hierarchical table is displayed in the effect component navigation view, it can be displayed in the effect component navigation view in the first rendering sequence.

Continuing with the above description, after an effect component is added, it will not only be presented in the effect component navigation view, but also be classified as belonging to which hierarchical node of which sub-navigation hierarchical table. When there are multiple sub-navigation hierarchical tables to be presented, the multiple sub-navigation hierarchical tables will be displayed in the default first rendering sequence.

Exemplarily, the effect components are drawn in a drawing order corresponding to the rendering order, and each sub-navigation hierarchical table is presented in a tree structure and is arranged in the rendering order in the effect component navigation view. It can be preset a default classification about which sub-navigation hierarchical table an effect component belongs to. For example, it is assumed that the effect components commonly used in effect rendering can be classified into the following categories: 2D foreground effect, 2D background effect, face shape effect, etc., these are just illustrative examples and will not be listed one by one. The default rendering sequence of these three categories of effect components can be set as follows: 2D background effect precedes face shape effect which precedes 2D foreground effect. If these three categories of effects are added in the effect component navigation view, 2D background effect, face effect, 2D foreground effect will be arranged in the effect component navigation view in the order from top to bottom accordingly. Each category can be set with a reference value. For example, filtering, beautification, and shape categories each corresponds to a reference value (500, 2500, 3000), which represents the sequential order of the category. It can be seen from the reference values that in the rendering order, the filtering category precedes the beautification category which precedes the shape category.

Furthermore, when a new sub-hierarchical node is added, the reference value needs to be recalculated according to the current layout. Assuming that this category of sub-hierarchical node appears for the first time, if the current reference value is less than a default reference value of this node, the default reference value of the node will be used as its reference value; if the current reference value is greater than the default reference value of the node, the current reference value plus one will be used as its reference value, and so on. If it does not appear for the first time, the current reference value plus one is used as its reference value.

In the present embodiment, the presentation order of sub-navigation hierarchical tables in the effect component navigation view is consistent with the rendering sequence, and the rendering sequence determines the rendering layers to which respective effect components belong in the rendering effect. The earlier the rendering time is, the lower the presentation location of the rendering layer will be; the later the rendering time is, the upper the presentation location of the rendering layer will be. The rendering order corresponds to the drawing order in which the effect components are drawn. This ensures that the presentation order of sub-navigation hierarchical tables in the effect component navigation view is consistent with the rendering order of the corresponding effect components.

Exemplarily, FIG.1b shows an exemplary diagram of an effect production interface during execution of the effect production method provided by the embodiment. As shown in FIG. 1b, the effect production interface 1 includes an effect component navigation view 11, which displays the effect components that have been added. The effect component navigation view 11 presents the sub-navigation hierarchical tables that have been added, and each sub-navigation hierarchical table is a tree structure component as a whole, the top row entry in the sub-navigation hierarchical table serves as a root node in the tree structure; the component label information of an included effect component serves as a row entry in the sub-navigation hierarchical table, constituting a sub-node or leaf node under the root node. The figure shows two sub-navigation hierarchical tables, a sub-navigation hierarchical table 1 includes a sub-hierarchical node 11 and a sub- hierarchical node 12, the sub-hierarchical node 11 includes leaf node 111 and leaf node 112. The sub-hierarchical node 12 includes a next-level sub-hierarchical node 121, and the sub-hierarchical node 121 includes a leaf node 1211 and a leaf node 1212. Likewise, the sub-navigation hierarchical table 2 includes a sub-hierarchical node 21, and the sub-hierarchical node 21 includes a leaf node 211. When a user adds a component, the label information of the added effect component will be displayed under a corresponding node in a corresponding sub-navigation hierarchical table accordingly.

Continuing with the above example, when a component adding operation of adding a new effect component is received, the executive subject needs to first determine the sub-navigation hierarchical table to which the effect component to be added belongs, and determine whether the sub-navigation hierarchical table to which it belongs is sub-navigation hierarchical table 1 or sub-navigation hierarchical table 2, assuming that the effect component to be added belongs to sub-navigation hierarchical table 2, the component label information of the effect component to be added can be added under a corresponding sub-hierarchical node in the sub-navigation hierarchical table 2 presented in the effect component navigation view. If the effect component to be added belongs to none of the sub-navigation hierarchical table 1 and the sub-navigation hierarchical table 2, it is necessary to construct a sub-navigation hierarchical table to which the effect component to be added belongs, and query a default rendering sequence, the rendering order of the effect components involved in sub-navigation hierarchical table 1, sub-navigation hierarchical table 2 and the sub-navigation hierarchical table to be added can be determined according to the default rendering sequence, the sub-navigation hierarchical table 1, sub-navigation hierarchical table 2 and the sub-navigation hierarchical table to be added can be sorted according to the determined rendering order and then presented in the effect component navigation view.

An embodiment of the present disclosure provides an effect production method, different from the related art in which component label information of a target component needs to be manually classified and the rendering order needs to be manually configured, in the process of effect production, the above mentioned technical scheme, upon receipt of a component addition operation for an effect component, can directly determine which sub-scene the added effect component belongs and which layer of the sub-scene it is located at, so that the component label information of the added effect component (such as the name of the effect component) can be presented in the sub-navigation hierarchical table of the sub-scene to which it belongs; meanwhile, the sub-navigation hierarchical table can be presented in the effect component navigation view in a certain rendering order, so that the designer can quickly know the rendering order of the added effect component during rendering through the presented effect component navigation view. The above-mentioned technical scheme of the embodiment can realize the automatic classification of the effect components added in the effect production into the sub-scenes to which they belong; meanwhile, the automatic sorting between the sub-navigation hierarchical tables in the effect component navigation view is equivalent to the automatic configuration of the rendering order of the effect components, which can also achieve the effect of showing the rendering order of the effect components to the designers from a visual perspective. The above technical scheme simplifies the effect production process, reduces the development and understanding costs of designers, and thus improves the accuracy and effectiveness of effect component drawing.

As a first alternative embodiment of the embodiment of the present disclosure, based on the above embodiment, the first alternative embodiment can further optimize the above effect production method, specifically, determining the first sub-navigation hierarchical table to which the first target component belongs may include the following steps:
a1) when at least one sub-navigation hierarchical table has been displayed in the effect component navigation view, determine whether the first target component belongs to the displayed sub-navigation hierarchical table.

In the alternative embodiment, the sub-navigation hierarchical table is taken as a component as a whole, before the component label information of the added effect component is presented, it is necessary to determine to whom the first target component belongs, that is, which sub-navigation hierarchical table the first target component belongs to. It can be further determined whether the sub-navigation hierarchical table to which the first sub-target component belongs has been displayed in the effect component navigation view. The determination result of this step may be that the first target component belongs to a sub-navigation hierarchical table displayed in the effect component navigation view, or may be that the first target component does not belong to any sub-navigation hierarchical table displayed in the target component object navigation view.

b1) If so, the sub-navigation hierarchical table to which the first target component belongs is indicated as a first sub-navigation hierarchical table, wherein the first rendering sequence is the current rendering sequence of at least one displayed sub-navigation hierarchical table being presented in the effect component navigation view.

Specifically, if the first target component belongs to a sub-navigation hierarchical table displayed in the effect component navigation view, that is, the sub-navigation hierarchical table to which the effect component to be added belongs has been displayed in the effect component navigation view, then the sub-navigation hierarchical table to which it belongs is indicated as the first sub-navigation hierarchical table. Subsequently, it is necessary to insert the component label information of the first target component under a corresponding hierarchical node in the first sub-navigation hierarchical table.

It should be clear that in this embodiment, a sub-navigation hierarchical table is taken as a component as a whole, if a sub-navigation hierarchical table to which the first target component to be added belongs already exists in the effect component navigation view, it is only necessary to insert the component label information of the effect component into the sub-navigation hierarchical table, without needing to reconstruct a sub-navigation hierarchical table to which the first target component belongs.

Among them, rendering sequence can be specifically understood as a sequential order of rendering effect components, the presentation hierarchy of the effect components after rendering depends on the rendering sequence. effect components that are rendered in the front are presented at the back in the hierarchy, and effect components that are rendered at the back are presented in the front in the hierarchy. The rendering sequence corresponds to a drawing order in which effect components are drawn.

In this alternative embodiment, an effect rendering file may be pre-stored in an electronic device, the effect rendering file may include effect categories, effect components corresponding to each effect category, and a default rendering order for the effect categories, it can also be understood that a rendering order for the sub-navigation hierarchical tables may pre-set and indicated as a default rendering order. The order of the sub-navigation hierarchical tables displayed in the effect component navigation view intuitively represents the rendering sequence of the effect components. Since the component label information of the first target component is added to a sub-navigation hierarchical table displayed in the effect component navigation view, the sequence of the sub-navigation hierarchical tables in the effect component navigation view is not changed, that is, the rendering order is not changed. Therefore, the current rendering order of the sub-navigation hierarchical tables in the effect component navigation view is indicated as the first rendering order.

c1) If not, construct a first sub-navigation hierarchical table to which the first target component belongs, wherein the first rendering sequence is determined based on the current rendering sequence, and the first sub-navigation hierarchical table is inserted into a corresponding position in the effect component navigation view in the first rendering sequence for display.

Specifically, if the first target component does not belong to any sub-navigation hierarchical table displayed in the effect component navigation view, that is, the sub-navigation hierarchical table to which the effect component to be added belongs is not displayed in the effect component navigation view, then a sub-navigation hierarchical table to which the first target component belongs needs to be constructed and indicated as the first sub-navigation hierarchical table. First, a first sub-navigation hierarchical table is constructed in the effect component navigation view, and then the component label information of the first target component is inserted under a corresponding hierarchical node in the first sub-navigation hierarchical table.

When a first target component is to be added, whether the first sub-target component exists in the effect rendering file would be first checked. If it exists, which is equivalent to knowing which hierarchical table the first sub-scene belongs to, meanwhile, the rendering order of the first sub-navigation hierarchical table can be determined according to a default rendering order in the effect rendering file. The rendering order after the first sub-navigation hierarchical table is added can be used as the first rendering order, and the first sub-scene hierarchy can be inserted into the effect component navigation view in the first rendering order. It should be noted that when an effect component is added, its corresponding sub-navigation hierarchical table is constructed and then presented in the effect component navigation view, the sorted displaying can be performed in the default rendering order in the effect rendering file. The newly constructed sub-navigation hierarchical table should be inserted into a corresponding position in the effect component navigation view in the default rendering order.

Accordingly, if the effect component navigation view is empty, a first sub-navigation hierarchical table to which the first target component belongs is constructed, and then the first sub-navigation hierarchical table is directly added to the effect component navigation view as the first one of sub-navigation hierarchical tables in the effect component navigation view, and is placed at a first place in the effect component navigation view.

This first alternative embodiment further optimizes how to determine the sub-navigation hierarchical table to which the added effect component belongs and how to determine the first rendering order before the component label information of the added effect component is presented. This technology ensures that the sorting and rendering orders of the sub-navigation hierarchical tables in the effect component navigation view are consistent with each other, and can more intuitively display the rendering relationship between the effect component navigation view and the effect component.

As a second alternative embodiment of the embodiment of the present disclosure, based on the above embodiments, this second alternative embodiment can further optimize the above effect production method, specifically, when the effect component navigation view displays at least two sub-navigation hierarchical tables, the method can further include the following steps:
a2) receiving a first drag-and-drop operation, wherein the first drag-and-drop operation acts on a row entry in a sub-navigation hierarchical table displayed in the effect component navigation view.

The above steps describe how the effect component navigation view exists and how to add effect components to construct the effect component navigation view. This alternative embodiment mainly describes that when there are at least two sub-navigation hierarchical tables in the effect component navigation view, a drag-and-drop operation can be performed to adjust the hierarchical relationship presented in the effect component navigation view, the drag-and-drop operation is indicated as a first drag-and-drop operation. When there are at least two sub-navigation hierarchical tables in the effect component navigation view, one operation that can be implemented is a drag-and-drop operation. Each row displayed under the sub-navigation hierarchical table can be understood as a row entry in the sub-navigation hierarchical table. For example, the top row entry can represent name information of the sub-hierarchical table, and a row entry corresponding to a sub-hierarchical node or a leaf node may be component label information of the added effect component.

This step is used to receive the first drag-and-drop operation, and the first drag-and-drop operation is specifically characterized by the user controlling a cursor through a signal input device such as a mouse and a touch screen to move the action object in the effect component navigation view.

A specific implementation of the executive subject parsing out that the user has performed the first drag-and-drop operation in an effect production interface can be described as: through the effect production interface configured in the device, a drag signal generated by an input device controlling a cursor to click on the effect production interface can be responded, thereby obtaining click information generated when the input device controls the cursor to click and feeding it back to an upper-level processing module, the processing module can analyze the click information to determine whether the user has performed the first drag-and-drop operation on the effect production interface and what row entry is dragged and dropped by the operation. Through information about the drag-and-drop row entry, the processing module can determine that the user manipulates the input device to perform a first drag-and-drop operation on the effect production interface. It can be understood that the first drag-and-drop behavior performed by the user through controlling the input device can also be determined by the relevant hardware or software of the system performing parsing in cooperation with each other, and by analyzing data information related to the first drag-and-drop behavior, it can be determined what operation the user has performed on the effect production interface, so that the first drag-and-drop operation triggered by the user can be received.

Preferably, an object that the first drag-and-drop operation acts on may include at least one of the following:
the top row entry in any sub-navigation hierarchical table in the effect component navigation view, or any other row entry in the sub-navigation hierarchical table except the top row entry; the top row entry in any sub-navigation hierarchical table in the effect component navigation view and at least one other row entry in at least one other sub-navigation hierarchical table except the top row entry; the top row entries in at least two sub-navigation hierarchical tables in the effect component navigation view; at least one other row entries in at least two sub-navigation hierarchical tables in the effect component navigation view except the top row entries.

The first drag-and-drop behavior of the first drag-and-drop operation includes at least one of the following:
dragging-and-dropping the action object to a blank space below in the effect component navigation view; dragging-and-dropping the action object to a space between two adjacent sub-navigation hierarchical tables in the effect component navigation view; dragging-and-dropping the action object to any row entry in any sub-navigation hierarchical table in the effect component navigation view; dragging-and-dropping the action object to a space between two adjacent row entries in any sub-navigation hierarchical table in the effect component navigation view.

It shall be understood that when an action object is selected, it is only displayed that the row entry is selected, any related operation, if desired, shall be further performed, for example, a drag-and-drop operations, only a drag-and-drop behavior will have a drag-and-drop response, for another example, if a row entry is intended to be renamed, it shall be double-clicked to change to an editable state.

The above-mentioned technical features of the embodiment provide specific limitations on which can serve as the action object when a drag-and-drop interaction operation is performed on an effect production interface during an effect production process, and also provide a specific description of the drag-and-drop behavior involved. Meanwhile, for different drag-and-drop behaviors performed on different action objects, different drag-and-drop responses can be given. Through the above-mentioned technical features, the embodiment can better demonstrate the diversity of interactive operations that can be provided to designers, and improve the scope of applicable objects of an effect production tool.

b2) When the first drag-and-drop operation meets a drag-and-drop response condition of a second sub-navigation hierarchical table, determining a second rendering sequence according to the first drag-and-drop operation, and adjust a display position of the second sub-navigation hierarchical table in the effect component navigation view according to the second rendering sequence.

The second sub-navigation hierarchical table may be specifically understood as a sub-navigation hierarchical table on which the first drag-and-drop operation acts. The drag-and-drop response condition can be specifically understood as at least two sub-navigation hierarchical tables existing in the effect component navigation view, and the action object and drag behavior of the drag-and-drop operation meeting a set requirement. In response to the above-mentioned reception of the first drag-and-drop operation, this step determines whether the first drag-and-drop operation meets the drag-and-drop response condition of the second sub-navigation hierarchical table, and when the drag-and-drop response condition is met, adjusts the display position of the second sub-navigation hierarchical table in the effect component navigation view.

Exemplarily, dragging-and-dropping to the bottom blank space means dragging the selected content with a mouse to a blank space with no content and then releasing the mouse. Dragging-and-dropping to the space between two adjacent sub-navigation hierarchical tables means dragging the selected content with the mouse to the space between the two sub-navigation hierarchical tables, the space will be presented in an activated and insertable state, when the mouse position moves to any activated area, a response can be displayed, for example, a blue activation line will be displayed. Dragging-and-dropping onto any row entry in any sub-navigation hierarchical table means dragging the selected content with the mouse to a target component in the sub-navigation hierarchical table. Dragging-and-dropping to the space between two adjacent row entries in any sub-navigation hierarchical table means dragging the selected content with the mouse to an area between the effect components in the sub-navigation hierarchical table, and the length of the activation line to be displayed can be determined according to the effect component above the dragging position.

If a row entry for an effect component is selected, dragging-and-dropping it towards the bottom blank space will have no effect; dragging-and-dropping it towards to the space between two sub-navigation hierarchical tables will also have no effect; when dragging-and-dropping it into the sub-navigation hierarchical table, if the activated area is located between two effect components, the selected effect component and its sub-level effect components will be inserted between the effect components; if the activated area is a certain effect component, the selected effect component and its sub-level effect components will be inserted into a sub-level below the selected effect component.

If the top row entry in a certain sub-navigation hierarchical table is selected, that is, a certain sub-navigation hierarchical table is selected, dragging-and-dropping it towards the bottom blank space would cause inserting the sub-navigation hierarchical table to the bottom of all sub-navigation hierarchical tables in the effect component navigation view; dragging-and-dropping it towards the space between two sub-navigation hierarchical tables would cause inserting it into the two sub-navigation hierarchical tables; dragging-and-dropping it into a sub-navigation hierarchical table will have no effect.

If row entries for multiple effect components are selected across the sub-navigation hierarchical tables, dragging-and-dropping them towards the bottom blank space will have no effect; dragging-and-dropping them towards the space between two sub-navigation hierarchical tables will have no effect; when dragging-and-dropping them towards a sub-navigation hierarchical table, if an area between two effect components is an activated area, the selected effect component and its sub-level effect components will be inserted between the effect components; if the activated area is a certain effect component, the selected effect component and its sub-level effect components will be mixed into the sub-level below the selected effect component.

If a sub-navigation hierarchical table and row entries for multiple target components are selected, dragging-and-dropping them towards the bottom blank space will have no effect; dragging-and-dropping them towards the space between two sub-navigation hierarchical tables will have no effect; dragging-and-dropping them towards a sub-navigation hierarchical table will have no effect.

If multiple sub-navigation hierarchical tables are selected, dragging-and-dropping them towards the bottom blank space would cause inserting the sub-navigation hierarchical tables to the bottom of all sub-navigation hierarchical tables in the effect component navigation view; dragging-and-dropping them towards the space between two sub-navigation hierarchical tables would cause inserting them into the two sub-navigation hierarchical tables; dragging-and-dropping them into a sub-navigation hierarchical table will have no effect.

It shall be noted that when a sub-navigation hierarchical table or an effect component is operated in the effect component navigation view, its presentation effect in the effect component navigation view would change, and there will also be corresponding change in an effect rendering preview panel. For example, if an effect component is dragged-and-dropped to a sub-navigation hierarchical node that does not match the usual order of the category of the component, for example, the rendering effect of the built-in filter category cannot be guaranteed to be correct, the user can use the preview function to discover it himself.

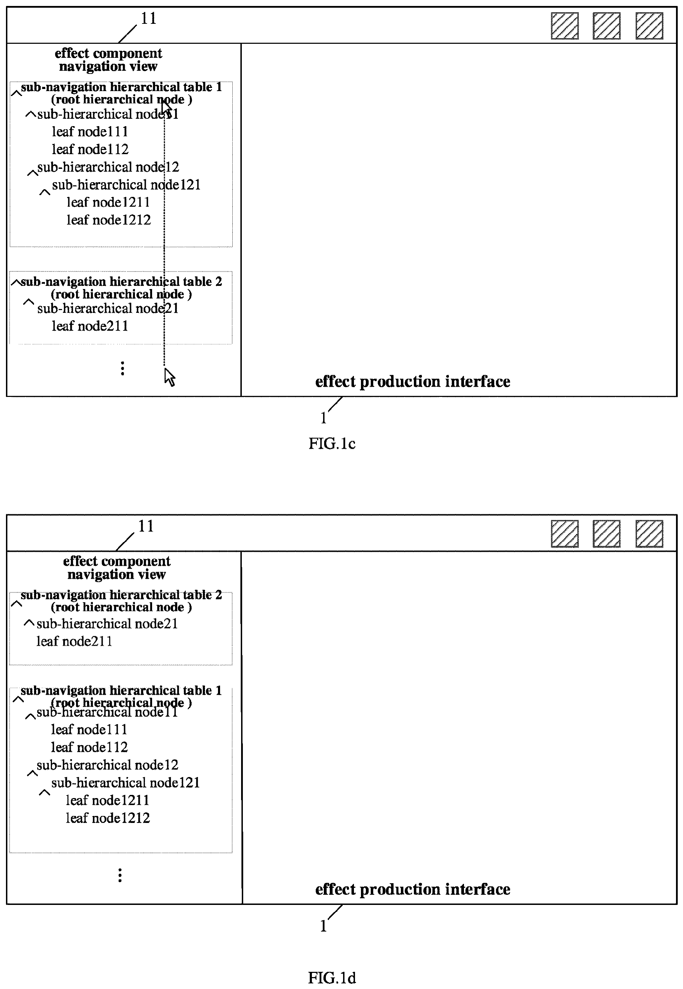

Exemplarily, FIG. 1c shows an execution example diagram of performing a first drag-and-drop operation in an effect component navigation view during execution of the effect production method provided by the embodiment. As shown in FIG. 1c, the top row entry in the sub-navigation hierarchical table 1 is selected and dragged-and-dropped to the bottom blank space, as the first drag-and-drop operation. FIG. 1d shows an effect example diagram presented in an effect component navigation view after a first drag-and-drop operation is performed in the effect component navigation view during execution of the effect production method provided by the embodiment. As shown in FIG. 1d, in response to the first drag-and-drop operation, the rendering sequence is adjusted, and the corresponding display positions presented in the effect component navigation view are also adjusted, the order of sub-navigation hierarchical table 1 and sub-navigation hierarchical table 2 is adjusted to the order of sub-navigation hierarchical table 2 and sub-navigation hierarchical table 1 from top to bottom.

This second alternative embodiment further adds the functional implementation of the effect production method, on the basis of the above method implementation, it is specifically added that the sorting of sub-scene row entries may be adjusted by dragging-and-dropping the row entries in the sub-navigation hierarchical table, thereby providing support for adjustment of the rendering sequence of the effect component, since the sequence of the sub-navigation hierarchical tables in the effect component navigation view corresponds to the rendering order, adjusting the rendering order of the effect components is more convenient and efficient.

Furthermore, the effect production interface further includes an effect rendering preview panel, and the method may further specifically include the following steps:
a3) while presenting the component label information under the target hierarchical node in the first sub-navigation hierarchical table, rendering the first target component in the first rendering sequence, and presenting the first effect of the first target component on a first rendering layer of the effect rendering preview panel.

In this embodiment, the effect production interface includes not only an effect component navigation view but also an effect rendering preview panel. The effect rendering preview panel is mainly used to display the effects after rendering the effect component. The effect rendering preview panel displays which effect components have rendering effects that are consistent with the effect components that have been added in the effect component navigation view.

This step is equivalent to that when an effect component is added, in addition to corresponding information being added in the effect component navigation view, the rendering effect displayed is also added on the effect rendering preview panel concurrently. Specifically, while presenting the component label information under the target hierarchical node of the first sub-navigation hierarchical table, the added effect component will be rendered and presented on the effect rendering preview panel. The rendering of the added effect components needs to be performed in the first rendering sequence determined in the above steps. The rendering sequence determines the presentation hierarchy of the effect components after rendering. effect components that are rendered in the front are presented at the back in the hierarchy, and effect components that are rendered at the back are presented in the front in the hierarchy. The rendering sequence corresponds to a drawing order in which effect components are drawn.

After the first target component is rendered in the first rendering sequence, the first target component will be presented on a rendering layer corresponding to the rendering order on the effect rendering preview panel, which is indicated as the first rendering layer in this embodiment.

b3) While adjusting the display position of the second sub-navigation hierarchical table in the effect component navigation view, rendering a second target component involved in the second sub-navigation hierarchical table and presenting a second effect of the second target component on a second rendering layer of the effect rendering preview panel.

In this step, a sub-navigation hierarchical table adjusted by dragging-and-dropping is indicated as the second sub-navigation hierarchical table, an effect component involved in the sub-navigation hierarchical table adjusted by dragging-and-dropping is indicated as the second target component, and a rendering layer where the effect component is rendered after the drag-and-drop adjustment is indicated as the second rendering layer.

This step is equivalent to when the first drag-and-drop operation is performed, in addition to the corresponding display order adjustment in the effect component navigation view, the rendering effect displayed on the effect rendering preview panel is also adjusted concurrently. Specifically, while the display position of the second sub-navigation hierarchical table in the effect component navigation view is adjusted, that is, while the sub-navigation hierarchical tables in the effect component navigation view are re-ordered by dragging-and-dropping, its purpose is to adjust the rendering layers rendered in real-time, and the adjusted rendering order is indicated as the second rendering order. When the display position of the second sub-navigation hierarchical table in the effect component navigation view is adjusted, the rendering order of the effect components rendered on the effect rendering preview panel will also be adjusted, and corresponding to the rendering order, the rendering layers where they are located will be adjusted accordingly.

It is clear that if the rendering effect is intended to be adjusted, the rendering layer presented on the rendering effect can be adjusted, different from the related art which requires complicated parameter configuration, the method provided in the embodiment is visual and can be realized by the user through a simple operation. The rendering layer adjustment can be realized by dragging-and-dropping, making user operation more convenient.

It shall be noted that each effect component has an automatic sorting switch, and the user can control whether the automatic sorting is turned on or off. When automatic sorting is turned on, when the action object is dragged-and-dropped up or down in the same hierarchical node, the rendering order will be automatically changed, which can be embodied as a change of presentation position, and the presentation position of the effect component in the rendering effect will also change. If automatic sorting is turned off, it can be considered that dragging-and-dropping only means an adjustment of presentation position and will not affect the rendering order of a corresponding component.

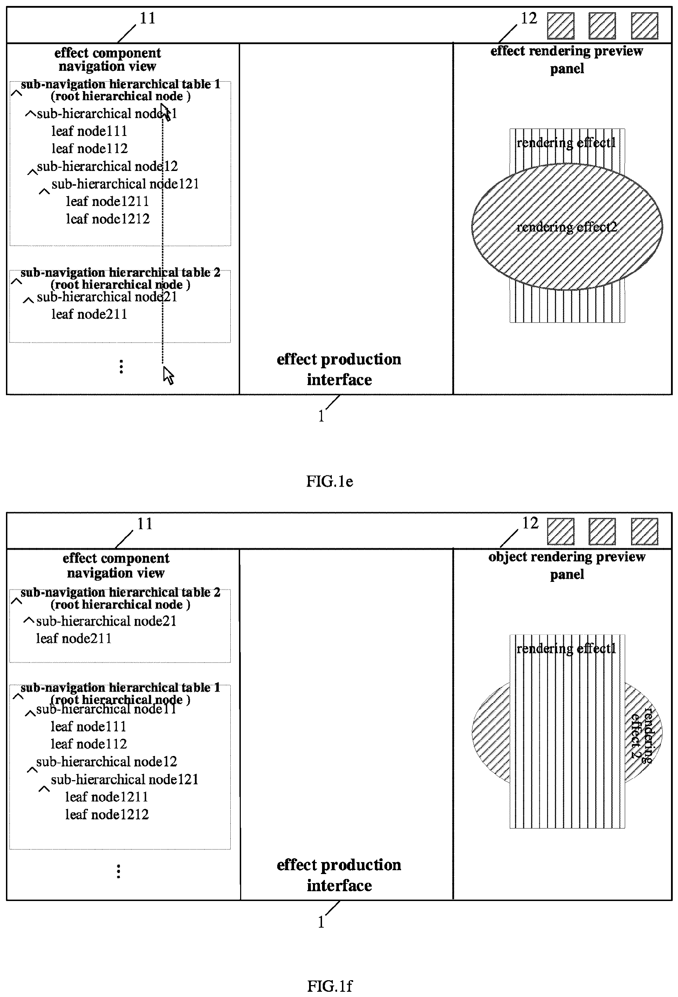

Exemplarily, FIG. 1e shows an effect example diagram presented in an effect rendering preview panel before a first drag-and-drop operation is performed in an effect component navigation view during the execution of the effect production method provided in this embodiment. As shown in FIG. 1e, this example describes the adjustment of the rendering preview panel presentation effect before the first drag-and-drop operation in the above example. In order to facilitate to distinguish that the effect components involved in sub-navigation hierarchical table 1 and the effect components involved in sub-navigation hierarchical table 2 belong to two rendering layers after rendering, in this example, the rendering layers of the effect components involved in sub-navigation hierarchical table 1 are represented as rendering effect 1, and the rendering layers of the effect components involved in sub-navigation hierarchical table 2 are represented as rendering effect 2. It can be seen that when the sub-navigation hierarchical table 1 and sub-navigation hierarchical table 2 are sorted from top to bottom in the effect component navigation view, the effect components involved in sub-navigation hierarchical table 1 will be rendered first, and then the effect components involved in sub-navigation hierarchical table 2 will be rendered. The hierarchical relationship presented on the effect rendering preview panel is that rendering effect 1 is at the bottom and rendering effect 2 is on the top.

FIG. 1f shows an effect example diagram presented in an effect rendering preview panel after a first drag-and-drop operation is performed in an effect component navigation view during execution of the effect production method provided in the embodiment. After the first drag-and-drop operation is performed, on the visualization level, in addition to adjusting the display position of the sub-navigation hierarchical table in the effect component navigation view, the effect components involved in the sub-navigation hierarchical table are rendered in the rendering order and presented on the corresponding rendering layers of the effect rendering preview panel. Corresponding to the adjustment of the display position of the sub-navigation hierarchical table in the effect component navigation view, the hierarchical relationship presented on the effect rendering preview panel is also adjusted, with rendering effect 2 at the bottom and rendering effect 1 on the top.

This technical solution further defines that the effect production interface further includes an effect rendering preview panel, when a scene adding operation or a drag-and-drop operation is received, while the presentation in the effect rendering preview panel is adjusted, the rendering effect of the effect component in the effect rendering preview panel will also change accordingly. The rendering effect presented on the effect rendering preview panel is consistent with the effect presented in the effect component navigation view, the effect component navigation view and the effect rendering preview panel are associated through the rendering sorting, so that users can more intuitively perceive embodying of the rendering order in the effect component navigation view and the effect rendering preview panel. By simply adjusting the effect component navigation view, the rendering effect of the effect rendering preview panel can be adjusted, which simplifies the operation process, reduces the user's learning and understanding costs, and improves the convenience and efficiency of operation.

As a third alternative embodiment of the embodiment of the preset disclosure, on the basis of the above embodiments, the third alternative embodiment can further optimize the above effect production method, specifically, the third alternative embodiment can optimize the sub-navigation hierarchical table into: a sub-navigation hierarchical table tree structure component, the top row entry in the sub-navigation hierarchical table serves as a root hierarchical node in the tree structure; the component label information of the added target component serves as a row entry in the sub-navigation hierarchical table, constituting a sub-hierarchical node or leaf node under the root hierarchical node; a collapsible control is respectively displayed on each of row entries corresponding to the root hierarchical node and the sub-hierarchical nodes.

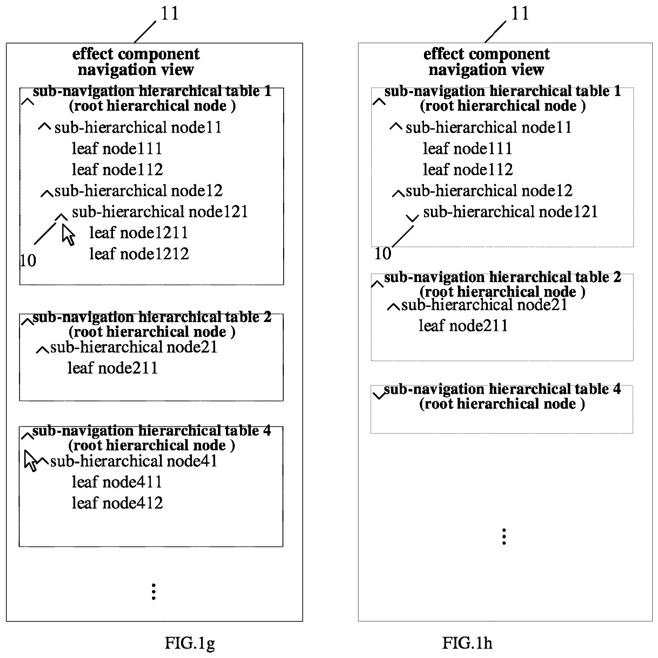

Exemplarily, FIG. 1g shows an exemplary diagram of presentation of an effect component navigation view during execution of the effect production method provided in the embodiment, as shown in FIG. 1g, the effect component navigation view includes sub-navigation hierarchical table 1, sub-navigation hierarchical table 2 and sub-navigation hierarchical table 4, each sub-navigation hierarchical table as a whole is a tree structure component, taking sub-navigation hierarchical table 1 as an example for explanation, sub-navigation hierarchical table 1 is the root hierarchical node, and its corresponding row entry has a collapsible control displayed thereon; sub-hierarchical node 11, sub-hierarchical node 12, and sub-hierarchical node 121 are sub-hierarchical nodes under the root hierarchical node, and their corresponding row entries each has a collapsible control displayed thereon; leaf node 111, leaf node 112, leaf node 1211, and leaf node 1212 correspond to component label information of different effect components respectively.

The embodiment defines the sub-navigation hierarchical tables. A sub-navigation hierarchical table is equivalent to a tree structure, a sub-hierarchical node or sub-node contained under the sub-navigation hierarchical table can be regarded as a category under the sub-navigation hierarchical table. There may be a root node in the sub-navigation hierarchical table, under which there may exist one or more sub-nodes at the same level, and under a sub-node, there may further exist sub-nodes or leaf nodes, and so on, until it is composed of leaf nodes. All sub-navigation hierarchical tables are tree structure components. A effect component can be a sub-hierarchical node or a leaf node. The collapsible control is used to realize the function of collapsing or expanding the row entry corresponding to the hierarchical node. A User can perform expansion and collapsing of a row entry by clicking on a collapsible control. Exemplarily, the collapsible controls may be located at the far left of the row entries corresponding to the root-hierarchical node and the sub-hierarchical nodes. The click operation on the expandable control can be left-clicking the collapsible control through the mouse. The row entry corresponding to the root-hierarchical node displays a collapsible control, by clicking the collapsible control, all row entries under the root-hierarchical node can be collapsed or expanded. A row entry corresponding to a sub-hierarchical node displays a collapsible control, and by clicking the collapsible control, all row entries under the sub-hierarchical node can be collapsed or expanded.

The alternative embodiment provides further description of the sub-navigation hierarchical table, by treating the sub-navigation hierarchical table as a tree structure component, when an effect component is intended to be added, the effect component can be added under a corresponding hierarchical node of a corresponding sub-navigation hierarchical table. Different from the related art which requires manual movement of the added effect component to the corresponding hierarchical node, the alternative embodiment can achieve automatic addition to a correct position. In addition, when a drag-and-drop operation is performed, each sub-navigation hierarchical table can be moved as a whole, which is more convenient to operate.

Further, based on the third alternative embodiment above, specifically, the method may further include the following steps:
a4) receiving an entry collapse-or-expand operation, wherein the entry collapse-or-expand operation is to trigger a collapsible control corresponding to a target hierarchical node; or the entry collapse-or-expand operation is to select a row entry where the target hierarchical node is located.

This embodiment specifically describes implementing a function of expanding a row entry for presentation or collapsing the row entry by receiving an entry collapse-or-expand operation. The target hierarchical node can be understood as a hierarchical node selected for performing the entry collapse-or-expand operation. The collapsible control is used to implement the function of collapsing or expanding the row entry corresponding to the hierarchical nodes. The entry collapse-or-expand is to trigger a collapsible control corresponding to the target hierarchical node, or to select a row entry where the target level is located. The user can collapse or expand a row entry by clicking on the collapsible control, or select a row entry where the target hierarchy to be collapsed-and-expanded is located. The underlying technical implementation of receiving the entry collapse-or-expand operation can refer to the technical implementation of receiving the component adding operation in the above steps, which will not be described in detail here.

b4) If the entry collapse-or-expand operation is an entry expansion operation, then expanding the row entries contained under the target hierarchical node for presentation.

If the entry collapse-or-expand is an entry expansion operation, this step is used to respond to the above step of receiving the entry collapse-or-expand operation, and can be specifically embodied in expanding the row entries contained in the target hierarchical node for presentation.

c4) If the entry collapse-or-expand operation is an entry collapsing operation, collapsing the row entries under the target hierarchical node.

If the entry collapse-or-expand operation is the entry collapsing operation, this step is used to respond to the above step of receiving the entry collapse-or-expand operation, which can be specifically embodied in expanding the row entries contained under the target hierarchical node for presentation; or, collapsing the row entries under the target hierarchical node. The underlying technical implementation of receiving the entry collapse-or-expand operation can refer to the technical implementation of receiving the component adding operation in the above steps, which will not be described in detail here.

Exemplarily, the collapsible controls may be located at the far left of the row entries corresponding to the root-hierarchical node and the sub-hierarchical nodes, the click operation on the expandable control can be left-clicking the collapsible control through the mouse. The row entry corresponding to the root-hierarchical node displays a collapsible control, by clicking the collapsible control or clicking the row entry corresponding to the root-hierarchical node, all row entries under the root-hierarchical node can be collapsed or expanded. A row entry corresponding to a sub-hierarchical node displays a collapsible control, and by clicking the collapsible control or clicking the row entry corresponding to the sub-hierarchical node, all row entries under the sub-hierarchical node can be collapsed or expanded.

Exemplarily, with continued reference to FIG. 1g, the row entries corresponding to the root-hierarchical node and the sub-hierarchical node each has a collapsible control 10 displayed thereon. The receiving an entry collapse-or-expand operation is clicking the collapsible control on the row entry of the sub-hierarchical node 121 and the collapsible control 10 on the row entry of the sub-navigation hierarchical table 4 respectively. FIG. 1h shows an exemplary diagram of presentation after an entry collapse-or-expand operation is received during execution of the effect production method provided in the embodiment. As shown in F1G.1h, when a collapsing operation for a row entry of the sub-hierarchical node 121 is received, the content under sub-hierarchical node 121 can collapse; when a collapsing operation for a row entry of the sub-navigation hierarchical table 4, the content under sub-navigation hierarchical table 4 can collapse.

The alternative embodiment further enlarges the functional implementation of the effect production method, on the basis of the above method implementation, it specifically further implements the expansion and collapsing of row entries through the row entry collapse-or-expand operation. This technology enables better management and presentation of effect component navigation views to users.

Furthermore, based on the third alternative embodiment above, specifically, the method may further include the following steps:
a5) receiving an entry naming operation for a first target row entry.

The embodiment specifically describes implementation of a function of renaming a row entry by receiving an entry naming operation. The row entry to be renamed is indicated as the first target row entry. The entry naming operation for the first target row entry may be to click on the first target row entry through an external signal input device, for example, to double-click the first target row entry with a mouse. There is no restriction on the specific implementation form of the entry naming operation.

b5) controlling the first target row entry to be in an editable state, and acquiring edited information edited in the first target row entry.

In this step, in response to the above-mentioned receiving the entry naming operation for the first target row entry, the selected first row entry can be controlled to be in an editable state. When the first row entry is in editable state, the user can enter a new row entry name into the edit box. The executive subject acquires the edited information edited in the first target row entry.

c5) In response to a name information saving operation, using and saving the edited information as a new entry name of the first target row entry.

Continuing with the above description, after the user has edited the new name of the row entry, the user can perform the name information saving operation. The name information saving operation can relate to a name save button, and the name information saving operation can be performed by clicking the name save button, or the name information saving operation can be implemented by clicking a blank space. Specifically, in response to the name information saving operation, this step can use and save the edited information as a new entry name of the first target row entry.

This technical solution further enlarges the functional implementation of the effect production method, on the basis of the above method implementation, it specifically further implements renaming of a row entry by receiving the entry naming operation for the row entry, this technology realizes better management of the effect component navigation view.

Further, based on the third alternative embodiment above, specifically, the method may further include the following steps:
a6) receiving an entry deletion operation for the second target row entry.

The embodiment specifically describes implement a row entry deletion function by receiving an entry deletion operation. The row entry to be deleted is indicated as the second target row entry. The entry deletion operation for the second target row entry may be clicking to select the second target row entry through an external signal input device, and clicking a delete option, for example, selecting the second target row entry by left-clicking the mouse, and then selecting the delete option in the operation menu list by right-clicking the mouse. The specific implementation form of the entry deletion operation is not limited here.

b6) In a case where the second target row entry is a root-hierarchical node, deleting a third sub-navigation hierarchical table to which the second target row entry belongs from the effect component navigation view, and undoing effect rendering of a target component involved in the third target sub-navigation hierarchical table on the effect rendering preview panel in the effect production interface.

This step responds to the entry deletion operation in the above step. In this embodiment, a sub-navigation hierarchical table to which the second target row entry belongs is indicated as the third sub-navigation hierarchical table. It can be understood that different row entries are located at different hierarchical positions and their deletion situations are different. If the second target row entry is a root hierarchical node, the entry deletion operation, after received, may be equivalent to deleting the entire sub-navigation hierarchical table. The rendering file information related to the target component involved in the sub-navigation hierarchical table is equivalently gone. Similarly, the rendering information related to the target component on the effect rendering preview panel will disappear, which is equivalent to undoing effect rendering of the target component involved in the third target sub-navigation hierarchical table on the effect rendering preview panel in the effect production interface.

c6) In a case where the second target row entry is a sub-hierarchical node, deleting all row entries contained under the sub-hierarchical node, and undoing effect rendering of a target component involved under the sub-hierarchical node in the effect rendering preview panel.

Specifically, the second target row entry is a sub-hierarchical node, and the content under the sub-hierarchical node is deleted, that is, all row entries contained in the sub-hierarchical node are deleted. Meanwhile, the file information under the sub-hierarchical node is also deleted, and the file information related to rendering of the target component involved under the sub-hierarchical node is equivalently gone. Similarly, the rendering information related to the target components on the effect rendering preview panel will disappear, which is equivalent to undoing the effect rendering of target component involved under the sub-hierarchical node in the effect rendering preview panel.

d6) In a case where the second target row entry is a leaf node, deleting the second target row entry, and undoing effect rendering of a target component involved in the second target row entry in the effect rendering preview panel.

Specifically, the second target row entry is a leaf node, that is, the content under the leaf node is deleted, that is, the row entry corresponding to the leaf node is deleted. Meanwhile, file information corresponding to the leaf node is also deleted, and the file information related to rendering of the target component involved in the leaf node is equivalently gone. Similarly, the rendering information related to the target component on the effect rendering preview panel will disappear, which is equivalent to undoing the effect rendering of the target component involved in the second target row entry in the effect rendering preview panel.

This technical solution further enlarges the functional implementation of the effect production method, on the basis of the above-mentioned method implementation, it specifically further proposes that the row entry can be deleted by receiving the row entry deletion operation, and meanwhile, the rendering of the involved effect component on the effect rendering preview panel in the effect production interface can be undone. The rendering effect presented on the effect rendering preview panel is consistent with the presentation effect in the effect component navigation view, the effect component navigation view and the effect rendering preview panel are associated through the rendering sorting, so that users can more intuitively perceive embodying of the rendering order in the effect component navigation view and the effect rendering preview panel. Through simply adjustment of the effect component navigation view, the presentation of the rendering effect in the effect rendering preview panel can be implemented, which reduces the user's learning and understanding costs and improves the convenience and efficiency of operation.

Furthermore, after responding to the entry deletion operation for the second target row entry, the method may also specifically include the following steps: if a third sub-navigation hierarchical table to which the second target row entry belongs has empty content, deleting the third sub-navigation hierarchical table from the effect component navigation view.

In this step, after responding to the entry deletion operation for the second target row entry, if the content of the third sub-navigation hierarchical table to which the second target row entry belongs is empty, that is, with respect to the deleted row entry being a root hierarchical node, and only the root node is left after responding to the deletion operation, which is equivalent to an empty sub-navigation hierarchical table, then deleting the third sub-navigation hierarchical table from the effect component navigation view is equivalent to deleting the entire table.

The alternative embodiment specifies the case where the entry deletion operation is for the root node, after the entry deletion operation is performed on a corresponding row entry, the empty sub-navigation hierarchical table to which the row entry belongs can also be deleted, thereby realizing the management of the effect component navigation view, so that only valid information is retained in the target component navigation view.

Furthermore, each row entry included in the sub-navigation hierarchical table is displayed with a rendering hide-or-present control; the method may further specifically include the following execution steps:
a7) receiving a rendering hide-or-present operation, wherein the rendering hide-or-present operation triggers a rendering hide-or-present control presented on a third target row entry.

The embodiment specifically describes implementing a function of presenting or hiding the rendering by receiving the rendering hide-or-present operation. The rendering hide-or-present is used to realize the presentation or hiding of the rendering of the involved target component in the effect rendering preview panel in the effect production interface. In this embodiment, a row entry on which the rendering hide-or-present operation needs to be performed is indicated as the third target row entry. The rendering hide-or-present operation is to trigger a rendering hide-or-present control presented on the third target row entry. The user can implement presentation or hiding of the rendering of the effect component involved in the row entry on the effect rendering preview panel in the effect production interface, by clicking the rendering hide-or-present control. The underlying technical implementation of receiving the rendering hide-or-present operation can refer to the technical implementation of receiving the component adding operation in the above steps, which will not be described in detail here.

b7) In a case where the third target row entry is a root hierarchical node, determining a fourth sub-navigation hierarchical table to which the third target row entry belongs, and presenting or hiding effect rendering of a target component involved in the fourth sub-navigation hierarchical table on the effect rendering preview panel in the effect production interface through the rendering hide-or-present operation.

This step responds to the rendering hide-or-present operation in the above step. In this embodiment, the sub-navigation hierarchical table to which the third target row entry belongs is indicated as a fourth sub-navigation hierarchical table. It can be understood that different row entries are located at different hierarchical positions and their hide-or-present situations are different. If the third target row entry is a root-hierarchical node, upon receiving the rendering hide-or-present, it is equivalent to presenting or hiding presentation of the target components corresponding to the entire fourth sub-navigation hierarchical table, that is, presenting or hiding the effect rendering of the target component involved in the fourth sub-navigation hierarchical table on the effect rendering preview panel in the effect production interface. In this embodiment, when a certain row entry is selected, the row entry in the effect component navigation view can be grayed out.

c7) In a case where the third target row entry is a sub-hierarchical node, presenting or hiding effect rendering of a target component involved in the sub-hierarchical node on the effect rendering preview panel in the effect production interface through the rendering hide-or-present operation.

This step responds to the rendering hide-or-present operation in the above step. If the third target row entry is a sub-hierarchical node, the rendering hide-or-present operation, after received, is equivalent to presenting or hiding the rendering of all corresponding effect components under the sub-hierarchical node, that is, hiding or presenting the effect rendering of the target component involved under the sub-hierarchical node on the effect rendering preview panel in the effect production interface. In the embodiment, when a row entry is selected, the row entry in the effect component navigation view can be grayed out.

d7) In a case where the third target row entry is a leaf node, presenting or hiding effect rendering of a target component involved in the third target row entry on the effect rendering preview panel in the effect production interface through the rendering hide-or-present operation.

This step responds to the rendering hide-or-present operation in the above step. If the third target row entry is a leaf node, the rendering hide-or-present operation, after received, is equivalent to presenting or hiding the rendering of all effect components corresponding to the leaf node, that is, hiding or presenting the rendering of the target component involved in the leaf node on the effect rendering preview panel in the effect production interface. In the embodiment, when a row entry is selected, the row entry in the effect component navigation view can be grayed out.

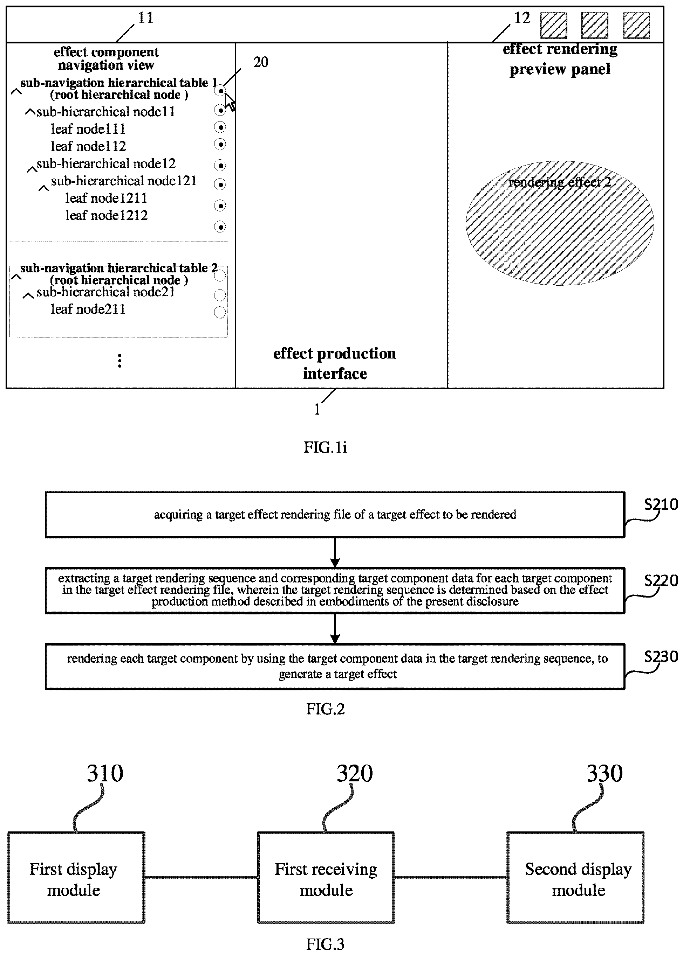

Exemplarily, FIG. 1i shows an exemplary diagram of a rendering effect after a rendering hide operation is received during execution of the effect production method provided in the embodiment. As shown in FIG. 1i, a rendering hide-or-present control 20 is displayed on each of the corresponding row entries of the root hierarchical node, sub-hierarchical nodes and leaf nodes. When a rendering hide operation is received for the sub-navigation hierarchical table 1, it is equivalent to hiding all the renderings of the target components involved in the sub-navigation hierarchical table 1, and the rendering effect 1 in the effect rendering preview panel is hidden. Comparing FIG. 1e and FIG. 1i, the effect presented in the effect rendering preview panel has changed, and the rendering effect 1 is hidden.

The alternative embodiment further enlarges the functional implementation of the effect production method, on the basis of the above-mentioned method implementation, it specifically further proposes implementing presentation or hiding of the rendering of the involved effect component in the effect rendering preview panel through a rendering hide-or-present operation, thereby meeting the requirement to change the effect rendering effect by adjusting the effect production, and providing convenience for user operation.

As a fourth alternative embodiment of the present embodiment, on the basis of the above embodiments, the effect production interface can be further optimized to further include: an effect model resource panel. The method may further specifically include the following steps:
a8) receiving a second drag-and-drop operation, wherein the second drag-and-drop operation acts on an effect model displayed in the effect model resource panel.

In this embodiment, in addition to an effect component navigation view and an effect rendering preview panel, the effect production interface further includes an effect model resource panel. The effect model resource panel has an effect model therein, which can be used for effect production, when an effect model needs to be added, the effect model can be added to the effect component navigation view by a drag-and-drop operation, which is indicated as a second drag-and-drop operation in this embodiment. The second drag-and-drop operation acts on the effect model displayed in the effect model resource panel. The effect model resource panel can be directly displayed in the effect production panel, or the effect model resource panel can be called and displayed through a trigger. Once displayed, the model can be dragged-and-dropped to the effect component navigation view by a drag-and-drop operation. Exemplarily, the resource model may be a 3D model.

b8) analyzing a second drag-and-drop behavior of the second drag-and-drop operation, and adding an effect model matching the second drag behavior to the effect component navigation view.

The executive subject analyzes the second drag behavior of the second drag-and-drop operation to parse out which effect model is selected by the second drag behavior and what operations have been performed on the effect model. After the second drag behavior is parsed, the selected effect model may be added to the effect component navigation view. Exemplarily, if the second drag-and-drop operation is to drag-and-drop a resource model to a blank space in the effect component navigation view, the resource model can be automatically added to the bottommost sub-navigation hierarchical table. If the second drag-and-drop operation is to drag-and-drop a resource model to a certain sub-navigation hierarchical table of the effect component navigation tree, the resource model is inserted into the sub-navigation hierarchical table.

The present alternative embodiment further enlarges the functional implementation of the effect production method, on the basis of the above-mentioned method implementation, it specifically further proposes that the effect production interface further includes an effect model resource panel, adding a resource template in the effect model resource panel to the effect component navigation view can be implemented through a drag-and-drop operation, thereby enriching the functions of effect production and improving the convenience of user operation.

Furthermore, the method further comprises:
a9) receiving a model instance creation operation, wherein the model instance creation operation is to trigger an instance creation option on the effect model resource panel.

The embodiment further provides a model instance creation function. The model instance creation function can be implemented by receiving a model instance creation operation, where the model instance production operation is to trigger an instance creation option on the effect model resource panel. When the user wants to perform a model instance creation operation, the user can click the instance creation option on the effect model resource panel.

b9) creating a model instance, and displaying instance label information of the model instance under a target hierarchical node in the fifth sub-navigation hierarchical table, wherein the fifth sub-navigation hierarchical table is displayed after the sub-navigation hierarchical tables that have been included in the effect component navigation view.

This step creates a model instance in response to the model instance creation operation, and displays the instance label information of the newly created model instance under a hierarchical node of the scene hierarchical table. For example, right-clicking will display many created instances, and clicking a selected instance will automatically add it to the hierarchical node. In this embodiment, by default, the newly created model instance will belong to the effect component navigation view and will be displayed following the sub-navigation hierarchical tables already included in the effect component navigation view, indicated as a fifth sub-navigation hierarchical table, and the model instance will be presented under a target hierarchical node in the sub-navigation hierarchical table. It is understandable that the ownership of a model instance can be preset during the development stage.

The alternative embodiment further enlarges the functional implementation of the effect production method, on the basis of the above-mentioned method implementation, it specifically further proposes another model instance creation method, through the model instance creation operation, the model instance in the effect model resource panel can be added to the effect component navigation view, which enriches the functions of effect production and improves the convenience of user operation.

Furthermore, the effect production interface further includes: an operation undo control, and the method may further specifically include the following steps:
a10) receiving a rollback operation, wherein the rollback operation is to trigger the operation undo control.

This embodiment specifically describes implementing a rollback function for the deletion operation by receiving a rollback operation. The operation undo control can realize an operation rollback function, and the rollback operation is to trigger the operation undo control. For example, the operation undo control may be clicked by a signal input device, such as a mouse.

b10) rollbacking to a display state corresponding to a previous operation node in the effect production interface.

In this step, in response to the received rollback operation above, the effect production interface may be rolled back to a display state corresponding to a previous operation node in the effect production interface. In this embodiment, there is no limit on the number of times the operation can be undone. For example, one rollback can be achieved by clicking the operation undo control once. Furthermore, when clicking the rollback control several times, the rolling-back operation can be executed a corresponding number of times. In addition, the effect production method provided in this embodiment further includes copy and paste functions, etc.

This alternative embodiment further enlarges the functional implementation of the effect production method, on the basis of the above method implementation, it specifically further proposes that the display state corresponding to the effect production interface can be rolled back by receiving a rollback operation, this technology can achieve better management of the effect component navigation view.

As a fifth alternative embodiment of the embodiment of the present disclosure, based on the above embodiments, this fifth alternative embodiment can further optimize the above effect production method, specifically, the method can further include the following steps:
a11) acquiring a final target rendering sequence of the sub-navigation hierarchical tables displayed in the effect component navigation view.

The above is just a description related to effect production, and the description related to effect rendering is introduced here. Specifically, the final rendering sequence of the sub-navigation hierarchical tables displayed in the effect component navigation view is acquired, the rendering sequence may be an order that obtained after the user perform addition or drag-and-drop adjustment according to needs, and the rendering order is indicated as the target rendering order.

b11) Integrating the target component data of the target components in the sub-navigation hierarchical tables according to the target rendering sequence to form an effect rendering file of the produced effect.

Among them, the target component can be specifically understood as the components involved in the effect production, and the effect component data can be specifically understood as the parameters required for rendering the target components. The effect rendering file can be specifically understood as various types of information required for effect rendering. In this embodiment, an effect rendering file is required when performing effect rendering. The effect component data of the effect components in each sub-navigation hierarchical table sorted according to the target rendering sequence is finally acquired to form an effect rendering file of the produced effect.

This alternative embodiment is described from the effect rendering perspective, and an effect rendering file is formed based on effect production, and is used for effect rendering, thereby establishing an association between effect production and effect rendering, and achieving the correspondence between the hierarchical orders of respective sub-navigation hierarchical tables in the effect component navigation view and the rendering orders, providing support for adjusting the rendering order in the rendering effect through simple operations on the effect component navigation view.

FIG. 2 shows a flow chart of an effect rendering method provided by an embodiment of the present disclosure., the embodiment of the present disclosure is applicable to a situation of performing effect rendering, the method can be executed by an effect rendering apparatus, which can be implemented in the form of software and/or hardware, and optionally, by an electronic device.

As shown in FIG. 2, the effect rendering method of an embodiment of the present disclosure may specifically include:
S210: acquiring a target effect rendering file of a target effect to be rendered.

This embodiment is mainly used to describe how to implement effect rendering. The target effect can be specifically understood as the effect that is desired to achieve, and the target effect rendering file can be specifically understood as the effect rendering file required to achieve the target effect. The target effect rendering file contains various information required for effect rendering. Exemplarily, the target effect rendering file includes target component data of target components in respective sub-navigation hierarchical tables integrated according to the target rendering sequence.

S220: extracting a target rendering sequence and corresponding target component data for each target component in the target effect rendering file, wherein the target rendering sequence is determined based on the effect production method described in the embodiment of the present disclosure.

Among them, the target effect rendering file contains the rendering order for each target component, which is indicated as a target rendering order in this embodiment, and the target component data corresponding to each target component in the target effect. The target rendering order for each target component in the target effect can be extracted from the target effect rendering file, and the corresponding target component data can also be extracted. It should be noted that, in this embodiment, the target rendering sequence is determined based on the effect production method provided in the embodiment of the present disclosure.

It can be understood that the arrangement order of the sub-navigation hierarchical tables in the effect component navigation view during effect production is consistent with the target rendering order, meanwhile, the rendering order of each target component in effect rendering is rendered according to the target rendering sequence, therefore, the display order of the sub-navigation hierarchical tables in the effect component navigation view in effect production is consistent with the rendering order of the target components in effect rendering.

S230, rendering each target component by using the target component data in the target rendering sequence, to generate a target effect.

Specifically, the target component data can be understood as various parameter information of the target component, each target component is rendered by using each target component data based on the target rendering order, thereby generating a target effect. Based on the target rendering order, respective target components are rendered sequentially, so the presentation effect of the rendering layer of each target component in the target effect will also be different. The rendering order determines the presentation level of the target component after rendering. For a target component that is rendered in the front, its presentation layer is at the back, and for the target component that is rendered in the back, its presentation layer is at the front. The rendering order corresponds to the drawing order in which the target components are drawn.

A effect rendering method provided by an embodiment of the present disclosure acquires a target effect rendering file of a target effect to be rendered; extracts a target rendering sequence and corresponding target component data for each target component in the target effect rendering file, wherein the target rendering sequence is determined based on the effect production method described in the first aspect of embodiment; renders each target component by using the target component data in the target rendering sequence, to generate a target effect. In the embodiment, the effect rendering file determined by the effect production method as above can more effectively ensure the accuracy and effectiveness of the effect rendering. Different from the effect rendering files formed by the existing production methods, the effect rendering files formed by the effect production method provided in the embodiment can realize the automatic classification of the effect components added in the effect production to the sub-scenes to which they belong, and also realize the automatic adjustment of the rendering order of the effect components. The entire scene drawing process not only simplifies the effect production process and reduces the development and understanding costs of designers, but also improves the accuracy and effectiveness of the effect component drawing.

FIG.3 is a structural schematic diagram showing an effect production apparatus provided by an embodiment of the present disclosure. As shown in FIG.3, the apparatus includes: a first display module 31, a first receiving module 32, and a second display module 33, wherein:
the first display module 31 is configured to display an effect production interface, the effect production interface including an effect component navigation view;
the first receiving module 32 is configured to receive a component adding operation, wherein the component adding operation is to select component label information of a first target component in a presented component menu list;
the second display module 33 is configured to determine a first sub-navigation hierarchical table to which the first target component belongs, and present the component label information under a target hierarchical node in the first sub-navigation hierarchical table; wherein the first sub-navigation hierarchical table is displayed in the effect component navigation view in a first rendering sequence in advance.

A effect production method provided by an embodiment of the present disclosure can, during the effect production process, directly determine a sub-scene to which an effect component belongs and a layer in the sub-scene at which the effect component is located upon receipt of an component addition operation for the effect component, thereby presenting component label information of the added effect component (such as the name of the effect component) in a sub-navigation hierarchical table of a sub-scene to which it belongs; meanwhile, the sub-navigation hierarchical table can be presented in an effect component navigation view in a certain rendering order, so that the designer can quickly know the rendering order of the added effect components when rendering through the presented effect component navigation view. The above technical scheme of the embodiment can realize automatic classification of the effect components added in the effect production into the sub-scenes to which they belong; meanwhile, automatic sorting of sub-navigation hierarchical tables in the effect component navigation view is equivalent to automatic configuration of the rendering order of the effect components, which can also achieve the effect of showing the rendering order of the effect components to the designers from a visual perspective. The above technical scheme can simplify the effect production process, reduces the development and understanding costs of designers, and thus improves the accuracy and effectiveness of effect component drawing.

Furthermore, the second display module 33 can be specifically configured to:
when at least one sub-navigation hierarchical table has been displayed in the effect component navigation view, determine whether the first target component belongs to the displayed at least one sub-navigation hierarchical table;
if so, the sub-navigation hierarchical table to which the first target component belongs is indicated as a first sub-navigation hierarchical table, wherein the first rendering sequence is the current rendering sequence of at least one displayed sub-navigation hierarchical table being presented in the effect component navigation view;
if not, construct a first sub-navigation hierarchical table to which the first target component belongs, wherein the first rendering sequence is determined based on the current rendering sequence, and the first sub-navigation hierarchical table is inserted into a corresponding position in the effect component navigation view in the first rendering sequence for display.

Furthermore, when the effect component navigation view displays at least two sub-navigation hierarchical tables, the apparatus further includes a first drag-and-drop response module, which can be specifically configured to:
receive a first drag-and-drop operation, wherein the first drag-and-drop operation acts on a row entry in a sub-navigation hierarchical table displayed in the effect component navigation view;
When the first drag-and-drop operation meets a drag-and-drop response condition of a second sub-navigation hierarchical table, determine a second rendering sequence according to the first drag-and-drop operation, and adjust a display position of the second sub-navigation hierarchical table in the effect component navigation view according to the second rendering sequence.

Furthermore, an object that the first drag-and-drop operation acts on may include at least one of the following:
the top row entry in any sub-navigation hierarchical table in the effect component navigation view, or any other row entry in the sub-navigation hierarchical table except the top row entry;
the top row entry in any sub-navigation hierarchical table in the effect component navigation view and at least one other row entry in at least one other sub-navigation hierarchical table except the top row entry;
the top row entries in at least two sub-navigation hierarchical tables in the effect component navigation view;
at least one other row entries in at least two sub-navigation hierarchical tables in the effect component navigation view except the top row entries.

The first drag-and-drop behavior of the first drag-and-drop operation includes at least one of the following:
dragging-and-dropping the action object to a blank space below in the effect component navigation view;
dragging-and-dropping the action object to a space between two adjacent sub-navigation hierarchical tables in the effect component navigation view;
dragging-and-dropping the action object to any row entry in any sub-navigation hierarchical table in the effect component navigation view;
dragging-and-dropping the action object to a space between two adjacent row entries in any sub-navigation hierarchical table in the effect component navigation view.

Furthermore, the effect production interface further includes an effect rendering preview panel, and the apparatus may further include a rendering presentation module, which can be specifically configured to:
while the component label information is presented under the target hierarchical node in the first sub-navigation hierarchical table, render the first target component, and present the first effect of the first target component on a first rendering layer of the effect rendering preview panel, according to the first rendering sequence;
while the display position of the second sub-navigation hierarchical table in the effect component navigation view is adjusted, render a second target component involved in the second sub-navigation hierarchical table and present a second effect of the second target component on a second rendering layer of the effect rendering preview panel, according to the second rendering sequence.

Furthermore, the sub-navigation hierarchical table is a tree structure component as a whole, and the top row entry in the sub-navigation hierarchical table serves as a root hierarchical node in the tree structure;
The component label information of the added target component is used as a row entry in the sub-navigation hierarchical table, to constitute a sub-hierarchical node or a leaf node under the root hierarchical node;
A collapsible control is displayed on each of row entries corresponding to the root-hierarchical node and the sub-hierarchical node.

Furthermore, the apparatus further includes a collapse-or-expand response module, which can be specifically configured to:
receive an entry collapse-or-expand operation, wherein the entry collapse-or-expand operation is to trigger a collapsible control corresponding to a target hierarchical node; or the entry collapse-or-expand operation is to select a row entry where the target hierarchical node is located;
If the entry collapse-or-expand operation is an entry expansion operation, then expand the row entries contained under the target hierarchical node for presentation;
If the entry collapse-or-expand operation is an entry collapsing operation, collapse the row entries under the target hierarchical node.

Furthermore, the apparatus further includes a naming response module, which can be specifically configured to:
receive an entry naming operation for a first target row entry;
control the first target row entry to be in an editable state, and acquire edited information edited in the first target row entry.
in response to a name information saving operation, use and save the edited information as a new entry name of the first target row entry.

Furthermore, the apparatus further includes a first deletion response module, which can be specifically configured to:
receive an entry deletion operation for a second target row entry;
in a case where the second target row entry is a root-hierarchical node, delete a third sub-navigation hierarchical table to which the second target row entry belongs from the effect component navigation view, and undo effect rendering of a target component involved in the third target sub-navigation hierarchical table on the effect rendering preview panel in the effect production interface;
in a case where the second target row entry is a sub-hierarchical node, delete all row entries contained under the sub-hierarchical node, and undo effect rendering of a target component involved under the sub-hierarchical node in the effect rendering preview panel.
in a case where the second target row entry is a leaf node, delete the second target row entry, and undo effect rendering of a target component involved in the second target row entry in the effect rendering preview panel.

Furthermore, the apparatus may further include a second deletion response module, which may be specifically configured to, after responding to an entry deletion operation for the second target row entry:
if the content of the third sub-navigation hierarchical table to which the second target row entry belongs is empty, then delete the third sub-navigation hierarchical table from the effect component navigation view.

Furthermore, each row entry included in the sub-navigation hierarchical table is displayed with a rendering hide-or-present control;

The apparatus may further specifically include a hiding response module, which may be specifically configured to:
receive a rendering hide-or-present operation, wherein the rendering hide-or-present operation triggers a rendering hide-or-present control presented on a third target row entry.
in a case where the third target row entry is a root hierarchical node, determine a fourth sub-navigation hierarchical table to which the third target row entry belongs, and present or hide effect rendering of a target component involved in the fourth sub-navigation hierarchical table on the effect rendering preview panel in the effect production interface through the rendering hide-or-present operation.
in a case where the third target row entry is a sub-hierarchical node, present or hide effect rendering of a target component involved in the sub-hierarchical node on the effect rendering preview panel in the effect production interface through the rendering hide-or-present operation;
in a case where the third target row entry is a leaf node, present or hide effect rendering of a target component involved in the third target row entry on the effect rendering preview panel in the effect production interface through the rendering hide-or-present operation.

Furthermore, the effect production interface may further include: an effect model resource panel;

The apparatus may further include a second drag-and-drop response module, which can be specifically configured to:
receive a second drag-and-drop operation, wherein the second drag-and-drop operation acts on an effect model displayed in the effect model resource panel;
analyze a second drag-and-drop behavior of the second drag-and-drop operation, and add an effect model matching the second drag behavior to the effect component navigation view.

Furthermore, the apparatus may further include a creation module, which can be specifically configured to:
receive a model instance creation operation, wherein the model instance creation operation is to trigger an instance creation option on the effect model resource panel;
create a model instance, and display instance label information of the model instance under a target hierarchical node in the fifth sub-navigation hierarchical table, wherein the fifth sub-navigation hierarchical table is displayed after the sub-navigation hierarchical tables that have been included in the effect component navigation view.

Furthermore, the effect production interface further includes: an operation undo control,

The apparatus may further include a rollback module, which may be specifically configured to:
receive a rollback operation, wherein the rollback operation is to trigger the operation undo control;
rollback to a display state corresponding to a previous operation node in the effect production interface.

Furthermore, the apparatus may further include a rendering file determination module, which can be specifically configured to:
acquire a final target rendering sequence of the sub-navigation hierarchical tables displayed in the effect component navigation view;
integrate the target component data of the target components in the sub-navigation hierarchical tables according to the target rendering sequence to form an effect rendering file of the produced effect.

The effect production apparatus provided in the embodiments of the present disclosure can execute the effect production method provided in any embodiment of the present disclosure, and has the functional modules and beneficial effects corresponding to the execution method.

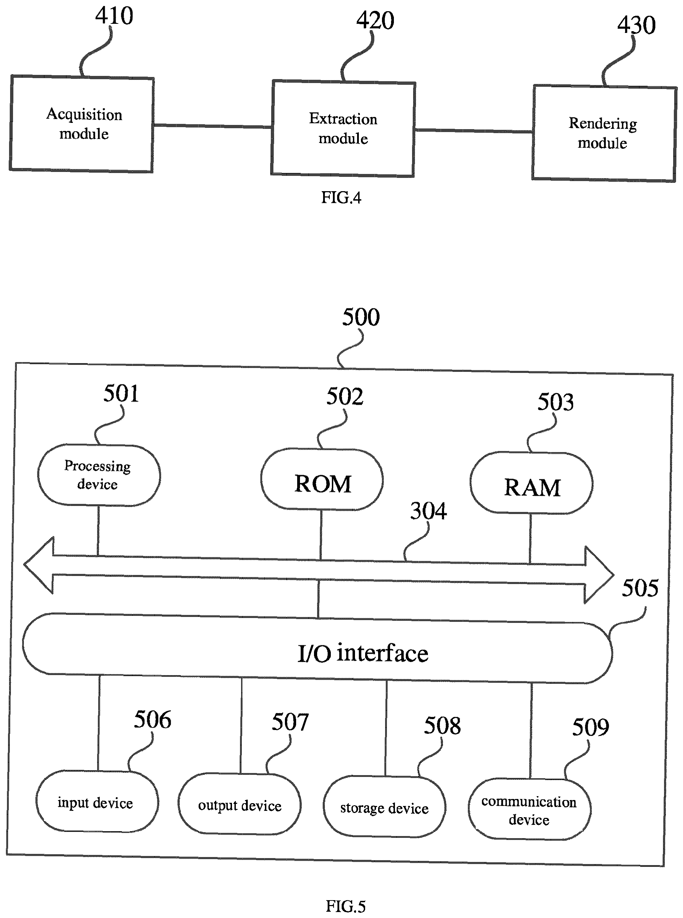

FIG.4 is a structural schematic diagram of an effect rendering apparatus provided by an embodiment of the present disclosure. As shown in FIG.4, the apparatus includes: a first display module 41, a first receiving module 42, and a second display module 43, wherein:
the acquisition module 41 may be configured to acquire a target effect rendering file of a target effect to be rendered;
the extraction module 42 may be configured to extract a target rendering sequence and corresponding target component data for each target component in the target effect rendering file, wherein the target rendering sequence is determined based on the effect production method described in the first aspect of embodiment;
the rendering module 43 may be configured to render each target component by using the target component data in the target rendering sequence, to generate a target effect.

The effect rendering apparatus provided in the embodiments of the present disclosure can execute the effect rendering method provided in any embodiment of the present disclosure, and has the functional modules and beneficial effects corresponding to the execution method.

It is worth noting that the various units and modules included in the above-mentioned apparatus are only divided according to functional logics, but are not limited to the above-mentioned division, as long as the corresponding functions can be achieved; in addition, the specific names of the functional units are only for the convenience of distinguishing each other, and are not used to limit the protection scopes of the embodiments of the present disclosure.

FIG. 5 illustrates a structural schematic diagram of an electronic device provided by an embodiment of the present disclosure. Hereinafter reference will be made with reference to FIG. 5, which illustrates a structural schematic diagram of an electronic device (such as a terminal device or a server in FIG. 5) 500 suitable for implementing the embodiments of the present disclosure. The electronic devices in the embodiments of the present disclosure may include, but are not limited to, mobile terminals such as mobile phones, notebook computers, digital broadcast receivers, PDA (Personal Digital Assistant), PAD (Tablet Computer), PMP (Portable Multimedia Player), vehicle-mounted terminals (such as vehicle-mounted navigation terminals), and fixed terminals such as digital TV and desktop computers. The electronic device shown in FIG. 5 is only an example, and should not bring any limitation to the functions and application scopes of the embodiments of the present disclosure.

As shown in FIG. 5, an electronic device 500 may include a processing device (such as a central processing unit, a graphics processor, etc.) 501, which may perform various appropriate actions and processes according to a program stored in a read-only memory (ROM) 502 or a program loaded from a storage device 508 into a random-access memory (RAM) 503. In the RAM 503, various programs and data required for the operation of electronic device 500 are also stored. A processing device 501, a ROM 502 and a RAM 503 are connected to each other through a bus 504. An input/output (I/O) interface 505 is also connected to the bus 504.

Generally, the following devices can be connected to the I/O interface 505: an input device 506 including, for example, a touch screen, a touch pad, a keyboard, a mouse, a camera, a microphone, an accelerometer, a gyroscope, etc.; an output device 507 including, for example, a liquid crystal display (LCD), a speaker, a vibrator, etc.; a storage device 508 including, for example, a magnetic tape, a hard disk, etc.; and a communication device 509. The communication device 509 may allow the electronic device 500 to communicate wirelessly or wired with other devices to exchange data. Although FIG. 5 shows an electronic device 500 with various devices, it should be understood that it is not required to implement or have all the devices as shown. More or fewer devices may alternatively be implemented or provided.

In particular, according to embodiments of the present disclosure, the processes described above with reference to the flowcharts can be implemented as a computer software program. For example, an embodiment of the present disclosure includes a computer program product including a computer program carried on a non-transitory computer-readable medium, which contains program codes for executing the methods shown in the flowcharts. In such an embodiment, the computer program can be downloaded and installed from the network through the communication device 509, or installed from the storage device 508, or installed from the ROM 502. When the computer program is executed by the processing device 501, the above functions defined in the methods of the embodiments of the present disclosure can be implemented.

The names of the messages or information exchanged between multiple devices in the embodiments of the present disclosure are only used for illustrative purposes and are not used to limit the scope of these messages or information.

The electronic device provided by the embodiment of the present disclosure and the interface interaction method provided by the above embodiment belong to the same inventive concept, the technical details not fully described in this embodiment can be referred to the above embodiment, and this embodiment has the same beneficial effects as the above embodiment.

An embodiment of the present disclosure provides a computer storage medium on which a computer program is stored, when the program is executed by a processor, the interface interaction method provided by the above embodiment can be implemented.

It should be noted that the computer-readable medium mentioned above in the present disclosure can be a computer-readable signal medium or a computer-readable storage medium or any combination of such two. The computer-readable storage medium can be, for example, but not limited to, an electrical, magnetic, optical, electromagnetic, infrared, or semiconductor system, apparatus or device, or a combination of the above. More specific examples of computer-readable storage media may include, but not limited to, an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium can be any tangible medium containing or storing a program, which can be used by or in combination with an instruction execution system, apparatus or device. In the present disclosure, a computer-readable signal medium may include a data signal propagated in baseband or as part of a carrier wave, in which computer-readable program codes are carried. This propagated data signal can take many forms, including but not limited to electromagnetic signals, optical signals or any suitable combination of the above. A computer-readable signal medium can also be any computer-readable medium other than a computer-readable storage medium, and can send, propagate or transmit a program for use by or in connection with an instruction execution system, apparatus or device. The program codes contained in the computer-readable medium can be transmitted by any suitable medium, including but not limited to wires, optical cables, RF (radio frequency) and the like, or any suitable combination of the above.

In some embodiments, the electronic devices can communicate with each other by using any currently known or future to-be-developed network protocol such as HTTP (HyperText Transfer Protocol), and can be interconnected with digital data communication in any form or medium (for example, communication network). Examples of communication networks include a local area network ("LAN"), a wide area network ("WAN"), an internet network (for example, Internet) and end-to-end networks (for example, ad hoc end-to-end networks), as well as any currently known or future to-be-developed networks.

The computer-readable medium may be included in the above electronic device; or it can exist alone without being assembled into the electronic device.

The computer-readable medium carries one or more programs, and when the one or more programs are executed by the electronic device, the electronic device is caused to: perform material parsing processing on an original material of a transaction object to obtain a target graphic material of the transaction object; based on the target graphic material and poster generation configuration information of the transaction object, generate target poster description information; generate and display the target poster image of the transaction object by rendering the target poster description information.

Computer program codes for performing the operations of the present disclosure may be written in one or more programming languages or their combinations, including but not limited to object-oriented programming languages, such as Java, Smalltalk, C++, and conventional procedural programming languages, such as "C" language or similar programming languages. The program codes can be completely executed on the user's computer, partially executed on the user's computer, executed as an independent software package, partially executed on the user's computer and partially executed on a remote computer, or completely executed on a remote computer or server. In the case involving a remote computer, the remote computer may be connected to a user computer through any kind of network, including a local area network (LAN) or a wide area network (WAN), or may be connected to an external computer (for example, through the Internet using an Internet service provider).

The flowcharts and block diagrams in the drawings illustrate the architectures, functions and operations of possible implementations of systems, methods and computer program products according to various embodiments of the present disclosure. In this regard, each block in the flowchart or block diagram may represent a module, a program clip, or a part of code that contains one or more executable instructions for implementing specified logical functions. It should also be noted that in some alternative implementations, the functions noted in the blocks may occur in a different order than those noted in the drawings. For example, two blocks shown in succession may actually be executed substantially in parallel, and they may sometimes be executed in the reverse order, depending on the functions involved. It should also be noted that each block in the block diagrams and/or flowcharts, and combinations of blocks in the block diagrams and/or flowcharts, can be implemented by a dedicated hardware-based system that performs specified functions or operations, or by a combination of dedicated hardware and computer instructions.

The modules involved in the embodiments described in the present disclosure can be realized by software or hardware. Among them, the name of the module does not constitute the limitation of the module itself in some cases. For example, the first acquisition unit may also be described as a "unit for acquiring at least two Internet Protocol addresses".

The functions described above herein may be at least partially performed by one or more hardware logic components. For example, without limitation, exemplary types of hardware logic components that can be used may include Field Programmable Gate Array (FPGA), Application Specific Integrated Circuit (ASIC), Application Specific Standard Product (ASSP), System on Chip (SOC), Complex Programmable Logic Device (CPLD) and so on.

In the context of the present disclosure, a machine-readable medium may be a tangible medium that may contain or store a program for use by or in connection with an instruction execution system, apparatus or device. The machine-readable medium may be a machine-readable signal medium or a machine-readable storage medium. A machine-readable medium may include, but is not limited to, an electronic, magnetic, optical, electromagnetic, infrared, or semiconductor system, device or equipment, or any suitable combination of the above. More specific examples of the machine-readable storage medium may include an electrical connection based on one or more lines, a portable computer disk, a hard disk, a random-access memory (RAM), a read-only memory (ROM), an erasable programmable read-only memory (EPROM or flash memory), an optical fiber, a convenient compact disk read-only memory (CD-ROM), an optical storage device, a magnetic storage device, or any suitable combination of the above.

According to one or more embodiments of the present disclosure, [Example 1] provides an effect production method, the method including:
displaying an effect production interface, the effect production interface including an effect component navigation view;
receiving a component adding operation, wherein the component adding operation is to select component label information of a first target component in a presented component menu list;
determining a first sub-navigation hierarchical table to which the first target component belongs, and presenting the component label information under a target hierarchical node in the first sub-navigation hierarchical table; wherein the first sub-navigation hierarchical table is displayed in the effect component navigation view in a first rendering sequence in advance.

According to one or more embodiments of the present disclosure, [Example 2] provides an effect production method, wherein the determining the first sub-navigation hierarchical table to which the first target component belongs may include:
when at least one sub-navigation hierarchical table has been displayed in the effect component navigation view, determining whether the first target component belongs to the displayed at least one sub-navigation hierarchical table;
if so, determining the sub-navigation hierarchical table to which the first target component belongs as a first sub-navigation hierarchical table, wherein the first rendering sequence is the current rendering sequence of at least one displayed sub-navigation hierarchical table being presented in the effect component navigation view;
if not, constructing a first sub-navigation hierarchical table to which the first target component belongs, wherein the first rendering sequence is determined based on the current rendering sequence, and the first sub-navigation hierarchical table is inserted into a corresponding position in the effect component navigation view in the first rendering sequence for display.

According to one or more embodiments of the present disclosure, [Example 3] provides an effect production method, when the effect component navigation view displays at least two sub-navigation hierarchical tables, the method further includes:
receiving a first drag-and-drop operation, wherein the first drag-and-drop operation acts on a row entry in a sub-navigation hierarchical table displayed in the effect component navigation view;
when the first drag-and-drop operation meets a drag-and-drop response condition of a second sub-navigation hierarchical table, determining a second rendering sequence according to the first drag-and-drop operation, and adjusting a display position of the second sub-navigation hierarchical table in the effect component navigation view according to the second rendering sequence.

According to one or more embodiments of the present disclosure, [Example 4] provides an effect production method,
an object that the first drag-and-drop operation acts on may include at least one of the following:
the top row entry in any sub-navigation hierarchical table in the effect component navigation view, or any other row entry in the sub-navigation hierarchical table except the top row entry;
the top row entry in any sub-navigation hierarchical table in the effect component navigation view and at least one other row entry in at least one other sub-navigation hierarchical table except the top row entry;
the top row entries in at least two sub-navigation hierarchical tables in the effect component navigation view;
at least one other row entries in at least two sub-navigation hierarchical tables in the effect component navigation view except the top row entries.
the first drag-and-drop behavior of the first drag-and-drop operation includes at least one of the following:
   dragging-and-dropping the action object to a blank space below in the effect component navigation view;
   dragging-and-dropping the action object to a space between two adjacent sub-navigation hierarchical tables in the effect component navigation view;
   dragging-and-dropping the action object to any row entry in any sub-navigation hierarchical table in the effect component navigation view;
   dragging-and-dropping the action object to a space between two adjacent row entries in any sub-navigation hierarchical table in the effect component navigation view.

According to one or more embodiments of the present disclosure, [Example 5] provides an effect production method, wherein the effect production interface further includes an effect rendering preview panel, and the method may further include:
while the component label information is presented under the target hierarchical node in the first sub-navigation hierarchical table, rendering the first target component, and present the first effect of the first target component on a first rendering layer of the effect rendering preview panel, according to the first rendering sequence;
while the display position of the second sub-navigation hierarchical table in the effect component navigation view is adjusted, rendering a second target component involved in the second sub-navigation hierarchical table and presenting a second effect of the second target component on a second rendering layer of the effect rendering preview panel, according to the second rendering sequence.

According to one or more embodiments of the present disclosure, [Example 6] provides an effect production method,
the sub-navigation hierarchical table is a tree structure component as a whole, and the top row entry in the sub-navigation hierarchical table serves as a root hierarchical node in the tree structure;
the component label information of the added target component is used as a row entry in the sub-navigation hierarchical table, to constitute a sub-hierarchical node or a leaf node under the root hierarchical node;
a collapsible control is displayed on each of row entries corresponding to the root-hierarchical node and the sub-hierarchical node.

According to one or more embodiments of the present disclosure, [Example 7] provides an effect production method, which may further include:
receiving an entry collapse-or-expand operation, wherein the entry collapse-or-expand operation is to trigger a collapsible control corresponding to a target hierarchical node; or the entry collapse-or-expand operation is to select a row entry where the target hierarchical node is located;
if the entry collapse-or-expand operation is an entry expansion operation, then expanding the row entries contained under the target hierarchical node for presentation;
if the entry collapse-or-expand operation is an entry collapsing operation, collapsing the row entries under the target hierarchical node.

According to one or more embodiments of the present disclosure, [Example 8] provides an effect production method, which may further include:
receiving an entry naming operation for a first target row entry;
controlling the first target row entry to be in an editable state, and acquiring edited information edited in the first target row entry.
in response to a name information saving operation, using and saving the edited information as a new entry name of the first target row entry.

According to one or more embodiments of the present disclosure, [Example 9] provides an effect production method, which may further include:
receiving an entry deletion operation for a second target row entry;
in a case where the second target row entry is a root-hierarchical node, deleting a third sub-navigation hierarchical table to which the second target row entry belongs from the effect component navigation view, and undoing effect rendering of a target component involved in the third target sub-navigation hierarchical table on the effect rendering preview panel in the effect production interface;
in a case where the second target row entry is a sub-hierarchical node, deleting all row entries contained under the sub-hierarchical node, and undoing effect rendering of a target component involved under the sub-hierarchical node in the effect rendering preview panel.
in a case where the second target row entry is a leaf node, deleting the second target row entry, and undoing effect rendering of a target component involved in the second target row entry in the effect rendering preview panel.

According to one or more embodiments of the present disclosure, [Example 10] provides an effect production method, after responding to an entry deletion operation for the second target row entry, the method may further include:
if the content of the third sub-navigation hierarchical table to which the second target row entry belongs is empty, then deleting the third sub-navigation hierarchical table from the effect component navigation view.

According to one or more embodiments of the present disclosure, [Example 11] provides an effect production method, wherein each row entry included in the sub-navigation hierarchical table is displayed with a rendering hide-or-present control, and wherein the method may further include:
receiving a rendering hide-or-present operation, wherein the rendering hide-or-present operation triggers a rendering hide-or-present control presented on a third target row entry.
in a case where the third target row entry is a root hierarchical node, determining a fourth sub-navigation hierarchical table to which the third target row entry belongs, and presenting or hiding effect rendering of a target component involved in the fourth sub-navigation hierarchical table on the effect rendering preview panel in the effect production interface through the rendering hide-or-present operation.
in a case where the third target row entry is a sub-hierarchical node, presenting or hiding effect rendering of a target component involved in the sub-hierarchical node on the effect rendering preview panel in the effect production interface through the rendering hide-or-present operation;
in a case where the third target row entry is a leaf node, presenting or hiding effect rendering of a target component involved in the third target row entry on the effect rendering preview panel in the effect production interface through the rendering hide-or-present operation.

According to one or more embodiments of the present disclosure, [Example 12] provides an effect production method, wherein the effect production interface further includes an effect model resource panel; the method may further include:
receiving a second drag-and-drop operation, wherein the second drag-and-drop operation acts on an effect model displayed in the effect model resource panel;
analyzing a second drag-and-drop behavior of the second drag-and-drop operation, and adding an effect model matching the second drag behavior to the effect component navigation view.

According to one or more embodiments of the present disclosure, [Example 13] provides an effect production method, which may further include:
receiving a model instance creation operation, wherein the model instance creation operation is to trigger an instance creation option on the effect model resource panel;
creating a model instance, and displaying instance label information of the model instance under a target hierarchical node in the fifth sub-navigation hierarchical table, wherein the fifth sub-navigation hierarchical table is displayed after the sub-navigation hierarchical tables that have been included in the effect component navigation view.

According to one or more embodiments of the present disclosure, [Example 14] provides an effect production method, wherein the effect production interface further includes an operation undo control, and wherein the method may further include:
receiving a rollback operation, wherein the rollback operation is to trigger the operation undo control;
rollbacking to a display state corresponding to a previous operation node in the effect production interface.

According to one or more embodiments of the present disclosure, [Example 15] provides an effect production method, which may further include:
acquiring a final target rendering sequence of the sub-navigation hierarchical tables displayed in the effect component navigation view;
integrating the target component data of the target components in the sub-navigation hierarchical tables according to the target rendering sequence to form an effect rendering file of the produced effect.

According to one or more embodiments of the present disclosure, [Example 16] provides an effect rendering method, the method including:
acquiring a target effect rendering file of a target effect to be rendered;
extracting a target rendering sequence and corresponding target component data for each target component in the target effect rendering file, wherein the target rendering sequence is determined based on the effect production method according to any one of Example 1 to Example 15;
rendering each target component by using the target component data in the target rendering sequence, to generate a target effect.

According to one or more embodiments of the present disclosure, [Example 17] provides an effect production apparatus, including:
a first display module configured to display an effect production interface, the effect production interface including an effect component navigation view;
a receiving module, configured to receive a component adding operation, wherein the component adding operation is to select component label information of a first target component in a presented component menu list;
a second display module, configured to determine a first sub-navigation hierarchical table to which the first target component belongs, and present the component label information under a target hierarchical node in the first sub-navigation hierarchical table; wherein the first sub-navigation hierarchical table is displayed in the effect component navigation view in a first rendering sequence in advance.

According to one or more embodiments of the present disclosure, [Example 18] provides an effect rendering apparatus, the apparatus including:
an acquisition module, configured to acquire a target effect rendering file of a target effect to be rendered;
an extraction module, configured to extract a target rendering sequence and corresponding target component data for each target component in the target effect rendering file, wherein the target rendering sequence is determined based on the effect production method according to any one of Example 1 to Example 15;
a rendering module, configured to render each target component by using the target component data in the target rendering sequence, to generate a target effect.

The above description is only a preferred embodiment of the present disclosure, and an illustration of the technical principles used. Those skilled in the art should understand that the scope of disclosure involved in the present disclosure is not limited to the technical solutions formed by a specific combination of the above-mentioned technical features, but should also cover other technical solutions formed by any combination of the above-mentioned technical features or their equivalent features without departing from the above-mentioned disclosure concepts. For example, the above-mentioned features are replaced with the technical features with similar functions disclosed in this disclosure (but not limited to) to form a technical solution.

Further, while operations are depicted in a particular order, this should not be understood as requiring that such operations be performed in the particular order shown or in a sequential order. Under certain circumstances, multitasking and parallel processing may be advantageous. Likewise, while the above discussion includes several specific implementation details, these should not be construed as limitations on the scope of the present disclosure. Certain features that are described in the context of separate embodiments can also be implemented in combination in a single embodiment. Conversely, various features that are described in the context of a single embodiment can also be implemented in multiple embodiments separately or in any suitable subcombination.

Although the subject matter has been described in language specific to structural features and/or methodological acts, it is to be understood that the subject matter defined in the appended claims is not necessarily limited to the specific features or acts described above. Rather, the specific features and acts described above are merely example forms of implementing the claims.

## Claims

1. An effect production method, comprising:
displaying an effect production interface, wherein the effect production interface comprises an effect component navigation view;
receiving a component adding operation, wherein the component adding operation is to select component label information of a first target component in a presented component menu list;
determining a first sub-navigation hierarchical table to which the first target component belongs, and presenting the component label information under a target hierarchical node in the first sub-navigation hierarchical table, wherein the first sub-navigation hierarchical table is displayed in the effect component navigation view in a first rendering sequence in advance.

2. The effect production method of claim 1, wherein the determining the first sub-navigation hierarchical table to which the first target component belongs, comprises:
in response to at least one sub-navigation hierarchical table having been displayed in the effect component navigation view, determining whether the first target component belongs to the displayed at least one sub-navigation hierarchical table;
in response to the first target component belongs to the displayed at least one sub-navigation hierarchical table, determining the sub-navigation hierarchical table to which the first target component belongs as a first sub-navigation hierarchical table, wherein the first rendering sequence is the current rendering sequence of at least one displayed sub-navigation hierarchical table being presented in the effect component navigation view;
in response to the first target component does not belong to the displayed at least one sub-navigation hierarchical table, constructing a first sub-navigation hierarchical table to which the first target component belongs, wherein the first rendering sequence is determined based on the current rendering sequence, and the first sub-navigation hierarchical table is inserted into a corresponding position in the effect component navigation view in the first rendering sequence for display.

3. The effect production method of claim 1, wherein when the effect component navigation view displays at least two sub-navigation hierarchical tables, the method further comprises:
receiving a first drag-and-drop operation, wherein the first drag-and-drop operation acts on a row entry in a sub-navigation hierarchical table displayed in the effect component navigation view;
in response to the first drag-and-drop operation meeting a drag-and-drop response condition of a second sub-navigation hierarchical table, determining a second rendering sequence according to the first drag-and-drop operation, and adjusting a display position of the second sub-navigation hierarchical table in the effect component navigation view according to the second rendering sequence.

4. The effect production method of claim 3, wherein,
an object that the first drag-and-drop operation acts on comprises at least one of the following:
the top row entry in any sub-navigation hierarchical table in the effect component navigation view, or any other row entry in the sub-navigation hierarchical table except the top row entry;
the top row entry in any sub-navigation hierarchical table in the effect component navigation view and at least one other row entry in at least one other sub-navigation hierarchical table except the top row entry;
the top row entries in at least two sub-navigation hierarchical tables in the effect component navigation view;
at least one other row entries in at least two sub-navigation hierarchical tables in the effect component navigation view except the top row entries,
a first drag-and-drop behavior of the first drag-and-drop operation comprises at least one of the following:
dragging-and-dropping the action object to a blank space below in the effect component navigation view;
dragging-and-dropping the action object to a space between two adjacent sub-navigation hierarchical tables in the effect component navigation view;
dragging-and-dropping the action object to any row entry in any sub-navigation hierarchical table in the effect component navigation view;
dragging-and-dropping the action object to a space between two adjacent row entries in any sub-navigation hierarchical table in the effect component navigation view.

5. The effect production method of claim 3 or 4, wherein the effect production interface further comprises an effect rendering preview panel, and wherein the method further comprises:
while the component label information is presented under the target hierarchical node in the first sub-navigation hierarchical table, rendering the first target component, and presenting the first effect of the first target component on a first rendering layer of the effect rendering preview panel, according to the first rendering sequence;
while the display position of the second sub-navigation hierarchical table in the effect component navigation view is adjusted, rendering a second target component involved in the second sub-navigation hierarchical table and presenting a second effect of the second target component on a second rendering layer of the effect rendering preview panel, according to the second rendering sequence.

6. The effect production method of claim 1, wherein,
the sub-navigation hierarchical table is a tree structure component as a whole, and the top row entry in the sub-navigation hierarchical table serves as a root hierarchical node in the tree structure;
the component label information of the added target component is used as a row entry in the sub-navigation hierarchical table, to constitute a sub-hierarchical node or a leaf node under the root hierarchical node;
a collapsible control is displayed on each of row entries corresponding to the root-hierarchical node and the sub-hierarchical node.

7. The effect production method of claim 6, further comprising:
receiving an entry collapse-or-expand operation, wherein the entry collapse-or-expand operation is to trigger a collapsible control corresponding to a target hierarchical node; or the entry collapse-or-expand operation is to select a row entry where the target hierarchical node is located;
in response to the entry collapse-or-expand operation being an entry expansion operation, expanding the row entries contained under the target hierarchical node for presentation;
in response to the entry collapse-or-expand operation being an entry collapsing operation, collapsing the row entries under the target hierarchical node.

8. The effect production method of claim 6, further comprising:
receiving an entry naming operation for a first target row entry;
controlling the first target row entry to be in an editable state, and acquiring edited information edited in the first target row entry.
in response to a name information saving operation, using and saving the edited information as a new entry name of the first target row entry.

9. The effect production method of claim 6, further comprising:
receiving an entry deletion operation for a second target row entry;
in response to the second target row entry being a root-hierarchical node, deleting a third sub-navigation hierarchical table to which the second target row entry belongs from the effect component navigation view, and undoing effect rendering of a target component involved in the third sub-navigation hierarchical table on the effect rendering preview panel in the effect production interface;
in response to the second target row entry being a sub-hierarchical node, deleting all row entries contained under the sub-hierarchical node, and undoing effect rendering of a target component involved under the sub-hierarchical node in the effect rendering preview panel;
in response to the second target row entry being a leaf node, deleting the second target row entry, and undoing effect rendering of a target component involved in the second target row entry in the effect rendering preview panel.

10. The effect production method of claim 9, wherein, after responding to the entry deletion operation for the second target row entry, the method further comprises:
in response to the content of the third sub-navigation hierarchical table to which the second target row entry belongs being empty, deleting the third sub-navigation hierarchical table from the effect component navigation view.

11. The effect production method of claim 6, wherein each row entry included in the sub-navigation hierarchical table is displayed with a rendering hide-or-present control, and wherein the method further comprises:
receiving a rendering hide-or-present operation, wherein the rendering hide-or-present operation triggers a rendering hide-or-present control presented on a third target row entry;
in response to the third target row entry being a root hierarchical node, determining a fourth sub-navigation hierarchical table to which the third target row entry belongs, and presenting or hiding effect rendering of a target component involved in the fourth sub-navigation hierarchical table on the effect rendering preview panel in the effect production interface through the rendering hide-or-present operation;
in response to the third target row entry being a sub-hierarchical node, presenting or hiding effect rendering of a target component involved in the sub-hierarchical node on the effect rendering preview panel in the effect production interface through the rendering hide-or-present operation;
in response to the third target row entry being a leaf node, presenting or hiding effect rendering of a target component involved in the third target row entry on the effect rendering preview panel in the effect production interface through the rendering hide-or-present operation.

12. The effect production method of claim 1, wherein the effect production interface further comprises an effect model resource panel; and wherein the method further comprises:
receiving a second drag-and-drop operation, wherein the second drag-and-drop operation acts on an effect model displayed in the effect model resource panel;
analyzing a second drag-and-drop behavior of the second drag-and-drop operation, and adding an effect model matching the second drag behavior to the effect component navigation view.

13. The effect production method of claim 12, further comprising:
receiving a model instance creation operation, wherein the model instance creation operation is to trigger an instance creation option on the effect model resource panel;
creating a model instance, and displaying instance label information of the model instance under a target hierarchical node in the fifth sub-navigation hierarchical table, wherein the fifth sub-navigation hierarchical table is displayed after the sub-navigation hierarchical tables that have been included in the effect component navigation view.

14. The effect production method of any one of claims 6-13, wherein the effect production interface further comprises an operation undo control, and wherein the method further comprises:
receiving a rollback operation, wherein the rollback operation is to trigger the operation undo control;
rollbacking to a display state corresponding to a previous operation node in the effect production interface.

15. The effect production method of claim 1, further comprising:
acquiring a final target rendering sequence of the sub-navigation hierarchical tables displayed in the effect component navigation view;
integrating the target component data of the target components in the sub-navigation hierarchical tables according to the target rendering sequence to form an effect rendering file of the produced effect.

16. An effect rendering method, comprising:
acquiring a target effect rendering file of a target effect to be rendered;
extracting a target rendering sequence and corresponding target component data for each target component in the target effect rendering file, wherein the target rendering sequence is determined based on the effect production method of any one of claims 1 to 15;
rendering each target component by using the target component data according to the target rendering sequence, to generate a target effect.

17. An effect production apparatus, comprising:
a first display module configured to display an effect production interface, the effect production interface comprising an effect component navigation view;
a receiving module, configured to receive a component adding operation, wherein the component adding operation is to select component label information of a first target component in a presented component menu list;
a second display module, configured to determine a first sub-navigation hierarchical table to which the first target component belongs, and present the component label information under a target hierarchical node in the first sub-navigation hierarchical table; wherein the first sub-navigation hierarchical table is displayed in the effect component navigation view in a first rendering sequence in advance.

18. An effect rendering apparatus, comprising:
an acquisition module, configured to acquire a target effect rendering file of a target effect to be rendered;
an extraction module, configured to extract a target rendering sequence and corresponding target component data for each target component in the target effect rendering file, wherein the target rendering sequence is determined based on the effect production method of any one of claims 1 to 15;
a rendering module, configured to render each target component by using the target component data according to the target rendering sequence, to generate a target effect.

19. An electronic device, comprising:
one or more processors;
a storage device for storing one or more programs;
wherein the one or more programs, when executed by the one or more processors, cause the one or more processors to implement the method of any one of claims 1 to 16.

20. A computer-readable storage medium having a computer program stored thereon, wherein the program, when executed by a processor, cause the method of any one of claims 1 to 16 to be implemented.

21. A computer program, wherein the computer program, when executed by a processor, causes the method of any one of claims 1 to 16 to be implemented.
